# EUROPEAN PATENT SPECIFICATION

(11) **EP 3 435 355 B1**
(45) Date of publication and mention of the grant of the patent: **30.08.2023**
(21) Application number: 18181631.5
(22) Date of filing: 04.07.2018
(51) Int. Cl.: B60W 30/02, B60W 30/095, G06V 20/58, G06V 20/59, G08G 1/16

(54) **INFORMATION PROCESSING APPARATUS, INFORMATION PROCESSING METHOD, AND RECORDING MEDIUM**
INFORMATIONSVERARBEITUNGSVORRICHTUNG, INFORMATIONSVERARBEITUNGSVERFAHREN UND AUFZEICHNUNGSMEDIUM
APPAREIL DE TRAITEMENT D'INFORMATIONS, PROCÉDÉ DE TRAITEMENT D'INFORMATIONS ET SUPPORT D'ENREGISTREMENT

(30) Priority: 28.07.2017 JP 2017146482; 02.03.2018 JP 2018037776
(43) Date of publication of application: 30.01.2019
(73) Proprietor: Panasonic Intellectual Property Corporation of America, Torrance, CA 90503 (US)
(72) Inventor: ISHII, Yasunori, Osaka, 540-6207 (JP); HAGAWA, Reiko, Osaka, 540-6207 (JP)
(74) Representative: Eisenführ Speiser

(56) References cited:
- WO-A1-2014/155884
- WO-A1-2016/103469
- JP-A- S63 270 240
- US-A1- 2010 138 113
- US-A1- 2014 375 810
- US-A1- 2018 257 563

## Description

### BACKGROUND

### 1. Technical Field

The present disclosure relates to an information processing apparatus or the like that is situated on board a vehicle or the like.

### 2. Description of the Related Art

Conventionally, an apparatus has been disclosed that, according to the payload of cargo carried by another vehicle trying to enter an intersection, for example, at the intersection or other places, asks that another vehicle to yield (e.g. decelerate) (see, for example, Japanese Unexamined Patent Application Publication No. 2007-026017). This makes it possible to, if the payload of another vehicle is not larger than a predetermined value, prevent danger by making that another vehicle more likely to decelerate.

WO 2016/103469 A1 discloses a collision avoidance system and a collision avoidance method, which detect the state of the driver of a vehicle, by using a driver state detection unit. For example, a nodding-off state of the driver and, by using an environment detection unit, the environment in which the vehicle is traveling is detected. A time setting unit sets a prescribed time, on the basis of the detected environment. An external warning device performs an external warning operation that warns other vehicles traveling in the vicinity of the vehicle. Then, if a time determination unit has determined that the prescribed time has passed, an internal warning device performs an internal warning operation that warns the driver of the vehicle.

US 2014/0375810 A1 discloses vehicular safety methods and arrangements, wherein a driver's inattention is communicated to other drivers, so that they may take appropriate defensive measures. Examples of measures that may be taken include increasing a distance from the inattentive driver, and driving so as to avoid the need for sudden braking or other abrupt action. Many other features and arrangements are also detailed.

### SUMMARY

However, in asking another vehicle to yield, Japanese Unexamined Patent Application Publication No. 2007-026017 only pays attention to the payload of that another vehicle but fails to pay attention to the state of the vehicle that the apparatus is situated on board. Therefore, depending on the state of the vehicle that the apparatus is situated on board, Japanese Unexamined Patent Application Publication No. 2007-026017 cannot prevent danger even by asking that another vehicle to yield. Further, in some cases, the vehicles' occupants may feel uncomfortable.

One non-limiting and exemplary embodiment provides an information processing apparatus or the like that makes it possible to more effectively prevent a dangerous or uncomfortable situation.

In one general aspect, the techniques disclosed here feature an information processing apparatus as defined in claim 1 ; an information processing method as defined in claim 11 and a non-transitory recording medium as defined in claim 12.

An information processing apparatus or the like according to the present disclosure makes it possible to more effectively prevent a dangerous or uncomfortable situation.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a block diagram showing an example of a configuration of an information processing apparatus according to an embodiment;
Fig. 2 is a flow chart showing an example of an operation of the information processing apparatus according to the embodiment;
Fig. 3 is a diagram showing a running scenery as seen from inside a vehicle in a first example;
Fig. 4 is a flow chart showing an example of an operation of the information processing apparatus in the first example;
Fig. 5 is a flow chart showing an example of an operation of the information processing apparatus in another embodiment of the first example;
Fig. 6 is a diagram showing a running scenery as seen from inside a vehicle in a second example;
Fig. 7 is a flow chart showing an example of an operation of the information processing apparatus in the second example;
Fig. 8 is a flow chart showing another example of an operation of the information processing apparatus in the second example;
Fig. 9 is a flow chart showing an example of an operation of the information processing apparatus in another embodiment of the second example;
Fig. 10 is a diagram showing a running scenery as seen from inside a vehicle in a third example;
Fig. 11 is a flow chart showing an example of an operation of the information processing apparatus in the third example;
Fig. 12 is a flow chart showing an example of an operation of the information processing apparatus in another embodiment of the third example;
Fig. 13 is a diagram showing a running scenery as seen from inside a vehicle in a fourth example;
Fig. 14 is a flow chart showing an example of an operation of the information processing apparatus in the fourth example; and
Fig. 15 is a flow chart showing an example of an operation of the information processing apparatus in another embodiment of the fourth example.

### DETAILED DESCRIPTION

An information processing apparatus of the present disclosure is described in claim 1 of the appended claims.

For example, when, in a case where the state of an object carried on the vehicle is a predetermined state, the vehicle has an influence exerted thereon by a moving body or the vehicle exerts an influence on the moving body, the vehicle needs to, for example, suddenly accelerate, suddenly decelerate, or quickly turn in order to soften the influence, so that there may occur a dangerous condition associated with the object. The present disclosure makes it possible to suggest to the moving object that the moving object take such an action that the vehicle has no influence exerted thereon by the particular moving body, i.e. such an action that there occurs no dangerous condition associated with the object, thus eliminating the need for the vehicle on which the object is being carried to, for example, suddenly accelerate, suddenly decelerate, or quickly turn. This makes it possible to more effectively prevent a dangerous or uncomfortable situation.

Further, the influence that the moving body exerts on the vehicle may be an influence that causes the vehicle to perform a different action from an action that the vehicle is currently performing. For example, the different action may be an action that causes an acceleration or angular speed of the vehicle to become not lower than a predetermined threshold.

Further, by making, to the moving body, notification based on the suggested action thus chosen, the vehicle can keep performing the action that it is currently performing or, specifically, the acceleration or angular speed of the vehicle is inhibited from becoming not lower than a predetermined threshold, so that the occurrence of a dangerous or uncomfortable situation associated with the object can be inhibited.

Further, the influence that the vehicle exerts on the moving body may be an influence that causes the moving body to cancel or postpone an action that the moving body is planning to perform at a future time.

According to this, for example, it is conceivable that in a case where the vehicle is trying to cross the road on which the moving body is running and causes the moving body to cancel (e.g. stop) an action (e.g. straight-ahead driving) that the particular moving body is planning to perform at a future time, the vehicle may accelerate so as not to cause the moving body to stop or the vehicle may accelerate so as to cause the moving body to stop for as short a period of time as possible. However, by making, to the moving body, the notification based on the suggested action thus chosen, the vehicle can for example let the moving body cross the road earlier than the vehicle. Therefore, the vehicle does not need to accelerate in order to inhibit the occurrence of a dangerous or uncomfortable situation associated with the object.

According to the invention, the object is an occupant of the vehicle, and the predetermined state is a state where the occupant is estimated to be endangered or discomforted by an action that the vehicle takes in reaction to the influence. For example, the predetermined state may be a state where the occupant is standing, a state where the occupant is not holding onto a fixture fixed in position in the vehicle, a state where the occupant is not wearing a seatbelt in an orderly manner, or a state where the occupant is holding a child.

According to this, as a dangerous or uncomfortable situation associated with the object, an occupant who is standing, an occupant who is not holding onto a fixture, an occupant who is not wearing a seatbelt in an orderly manner, or a child being held by an occupant can be inhibited from being endangered or discomforted.

Further, the object may be cargo carried on a load-carrying platform of the vehicle, and the predetermined state may be a state where the cargo is estimated to endanger or discomfort its surroundings due to an action that the vehicle takes in reaction to the influence. For example, the predetermined state may be a state where the cargo is unfixed, a state where the cargo is on a swing, or a state where the cargo is blocking view of a driver of the vehicle or another vehicle around the vehicle.

According to this, as a dangerous or uncomfortable situation associated with the object, cargo that is in an unstable state or cargo that is blocking the driver's view can be inhibited from endangering or discomforting its surroundings.

Further, the choosing may include choosing the action according to the number or amount of objects that are in the predetermined state.

For example, a dangerous or uncomfortable situation associated with the object may cause greater damage or exert a greater influence when the number of amount of such objects is larger. Therefore, a dangerous or uncomfortable situation can be more effectively prevented by choosing a suggested action according to the number or amount of objects that are in the predetermined state.

Further, the operations may further include: receiving a response to the notification; and controlling the vehicle according to the response.

According to this, depending on a response to the notification made to the moving body, the vehicle may need to perform vehicle control in order to prevent a dangerous or uncomfortable situation. Therefore, a dangerous or uncomfortable situation can be more effectively prevented by controlling the vehicle according to the response.

Further, the moving body may be another vehicle, and the action thus chosen may be movement control of that another vehicle.

According to this, a dangerous or uncomfortable situation can be more effectively prevented by making, to another vehicle, notification based on movement control of that another vehicle.

Further, the moving body may be a person, and the action thus chosen may be a movement or stoppage of the person.

According to this, a dangerous or uncomfortable situation can be more effectively prevented by making, to a person, notification based on a movement or stoppage of the person.

Further, the notification may be control information for achieving the action thus chosen.

According to this, the particular moving body (e.g. another vehicle) can be controlled by the control information in order to achieve the suggested action.

Further, the notification may be presentation of an image, a sound, or a vibration indicating the action thus chosen.

According to this, the notification based on the suggested action can be made to the particular moving body by presenting an image, a sound, or a vibration indicating the suggested action.

Further, an information processing method of the present disclosure is described in claim 11 of the appended claims.

This makes it possible to provide an information processing method that makes it possible to more effectively prevent a dangerous or uncomfortable situation.

Further, a non-transitory recording medium of the present disclosure is described in claim 12 of the appended claims.

This makes it possible to provide a non-transitory recording medium storing thereon a program that makes it possible to more effectively prevent a dangerous or uncomfortable situation.

The following describes an embodiment in detail with reference to the drawings.

It should be noted that each of the embodiments to be described below shows a general or specific example. The numerical values, the shapes, the materials, the constituent elements, the placement positions and connection forms of the constituent elements, the steps, the orders of the steps, and the like that are shown in the following embodiments are mere examples and are not intended to limit the present disclosure. Further, those of the constituent elements in the following embodiments which are not recited in an independent claim representing the most generic concept are described as optional constituent elements. Embodiment

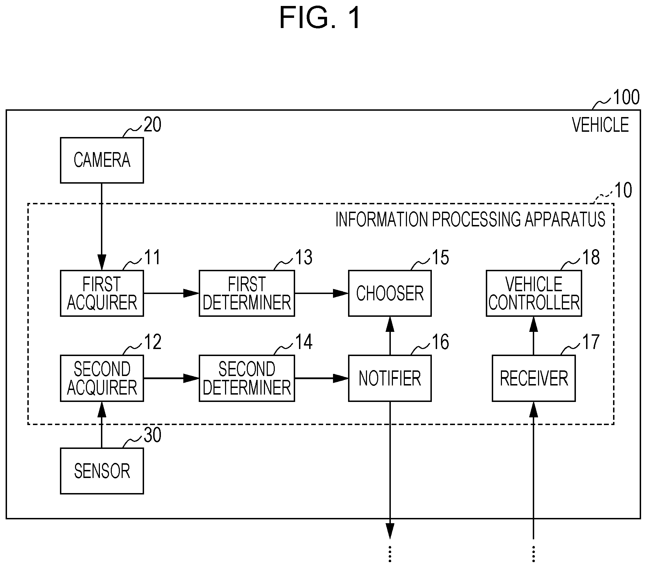

The following describes an embodiment with reference to Figs. 1 to 15.

### 1. Configuration of Information Processing Apparatus

Fig. 1 is a block diagram showing an example of a configuration of an information processing apparatus 10 according to Embodiment 1. It should be noted that Fig. 1 also shows a vehicle 100 that the information processing apparatus 10 is situated on board, a camera 20 situated on board the vehicle 100, and a sensor 30 situated on board the vehicle 100.

The camera 20 is a camera that photographs an area around the vehicle 100 and, for example, is capable of photographing areas ahead of, lateral to, and behind the vehicle 100. The camera 20 may be a camera of an event data recorder or the like. Further, the vehicle 100 may further include a radar, a LIDAR, or the like.

For example, in a case where the vehicle 100 is a regular vehicle, a bus, or the like, the sensor 30 is a camera installed inside the vehicle 100 to photograph an occupant (passenger) of the vehicle 100. Further, for example, in a case where the vehicle 100 is a truck or the like, the sensor 30 is a sensor that measures the weight of cargo carried on a load-carrying platform of the vehicle 100. Further, for example, in a case where the vehicle 100 is a truck or the like, the sensor 30 is a sensor (such as an infrared sensor or a camera) that measures the height of cargo carried on the load-carrying platform of the vehicle 100. In a case where the vehicle 100 is a truck or the like, the vehicle 100 may include, as the sensor 30, a camera installed inside the vehicle 100 to photograph an occupant of the vehicle 100.

The information processing apparatus 10 is situated on board the vehicle 100 and constituted, for example, by one electronic control unit (ECU) or a plurality of ECUs connected by an onboard network. The information processing apparatus 10 proposes, with use of a result of detection that is obtained from the camera 20, the sensor 30, or the like, suggests that a nearby moving body estimated to exert an influence on the vehicle 100 or have an influence exerted thereon by the vehicle 100 take such an action as not to exert an influence on the vehicle 100. By exerting an influence on the moving body, the vehicle 100 ends up taking an action for softening the influence, and as a result, the vehicle 100 ends up having an influence exerted thereon by the moving body. By so doing, the information processing apparatus 10 inhibits the vehicle 100, for example, from suddenly accelerating, suddenly decelerating, or quickly turning due to an influence exerted thereon, thus inhibiting the occurrence of a dangerous condition associated with an object carried on the vehicle 100. The information processing apparatus 10 includes a first acquirer 11, a second acquirer 12, a first determiner 13, a second determiner 14, a chooser 15, a notifier 16, a receiver 17, and a vehicle controller 18.

The first acquirer 11 acquires a result of detection of a nearby moving body around the vehicle 100. For example, the first acquirer 11 acquires, as a result of detection, an image that is obtained by photographing an area around the vehicle 100 with the camera 20. Further, for example, the first acquirer 11 acquires, as a result of detection, radar information that is obtained by scanning an area around the vehicle 100 with the radar or the LIDAR. Information acquired by the first acquirer 11 is sent to the first determiner 13 for analysis or for use in determination based on machine learning.

The second acquirer 12 acquires object state information indicating the state of an object carried on the vehicle 100. Examples of the object include an occupant (passenger) of the vehicle 100 or cargo carried on the load-carrying platform of the vehicle 100. For example, the second acquirer 12 acquires, as object state information, an image that is obtained by photographing an occupant of the vehicle 100 with the sensor 30 (camera). Further, for example, the second acquirer 12 acquires, as object state information, a change in weight according to location on the load-carrying platform (i.e. a change in center of gravity of cargo) as obtained by the sensor 30 (weight sensor). It should be noted that object state information does not include a payload of cargo. Information acquired by the second acquirer 12 is sent to the second determiner 14 for analysis or for use in determination based on machine learning. It should be noted that the information processing apparatus 10 may have an inputter and the second acquirer 12 may acquire object state information by the object state information being inputted to the inputter.

The first determiner 13 determines, on the basis of a result of detection acquired by the first acquirer 11, whether a nearby moving body exerts an influence on the vehicle 100. For example, the first determiner 13 analyzes an image, radar information, or the like and thereby determines the position, speed, orientation, state, attribute, and the like of another vehicle, a person, or the like serving as a nearby moving body around the vehicle 100. Then, the first determiner 13 determines, on the basis of the position, speed, orientation, state, attribute, and the like of the nearby moving body, whether the nearby moving body exerts an influence on the vehicle 100. The influence is an influence that causes the vehicle 100 to perform a different action from an action that the vehicle 100 is currently performing. The different action is an action that causes the acceleration or angular speed of the vehicle 100 to become not lower than a predetermined threshold. The different action is sudden acceleration, sudden deceleration, quick turning, or the like. The predetermined threshold is not limited to a particular value. The predetermined threshold is such a value that an occupant or cargo on the vehicle 100 wobbles. The predetermined threshold is set as appropriate. It should be noted that a determination that is made by the first determiner 13 is not limited to one based on a logical or statistical analysis of an image, radar information, and the like, but may for example be one based on machine learning such as deep learning, one based on a motion prediction, or the like. Further, the determination may be a determination based on information that is obtained, for example, via intervehicular communication, communication with an infrastructure (such as a roadside machine), or a GPS (global positioning system).

Further, the first determiner 13 determines, on the basis of a result of detection acquired by the first acquirer 11, whether the vehicle 100 exerts an influence on a nearby moving body. For example, the first determiner 13 determines, on the basis of the position, speed, orientation, state, attribute, and the like of a nearby moving body determined as mentioned above, whether the vehicle 100 exerts an influence on the nearby moving body. The influence is an influence that causes the nearby moving body to cancel or postpone an action that the nearby moving body is planning to perform at a future time. Examples of the action that the nearby moving body is planning to perform at a future time include crossing the road on which the vehicle 100 is running, merging onto the road, crossing over into the lane in which the vehicle 100 is running, and similar actions.

The second determiner 14 determines whether the state of an object as indicated by object state information acquired by the second acquirer 12 is a predetermined state that is a state that possibly endangers or discomforts the object or its surroundings. The second determiner 14 analyzes object state information that is obtained by the sensor 30.

For example, in a case where the sensor 30 is a camera installed inside the vehicle 100, the second determiner 14 determines the state of an object (occupant) on the vehicle 100 by analyzing an image that is obtained by the camera photographing the interior of the vehicle 100 and determines whether the state of the object (occupant) is the predetermined state. An example of the predetermined state is a state where the occupant is estimated to be endangered or discomforted by an action that the vehicle 100 takes in reaction to an influence exerted on the vehicle 100 by a nearby moving body. Specifically, the predetermined state is a state where the occupant is standing, a state where the occupant is not holding onto a fixture fixed in position in the vehicle 100 (such as a hand strap or a grip or stanchion pole fixed in position on a seat or the like), a state where the occupant is not wearing a seatbelt in an orderly manner, a state where the occupant is holding a child, or a similar state. In these states, the occupant is estimated to be endangered or discomforted by the vehicle 100 having an influence exerted thereon by a nearby moving body. For example, when the vehicle 100 suddenly accelerates, suddenly decelerates, or quickly turns due to an influence exerted thereon by a nearby moving body, an occupant who is standing or not holding onto a fixture may fall over or an occupant who is not wearing a seatbelt in an orderly manner or a child being held by an occupant may be thrown out of the seat. Further, when the vehicle 100 suddenly accelerates, suddenly decelerates, or quickly turns, an occupant may get offended by having his/her body shaken.

Further, for example, in a case where the sensor 30 is a weight sensor that measures the weight of cargo carried on the load-carrying platform of the vehicle 100, the second determiner 14 acquires a change in weight according to location on the load-carrying platform (i.e. a change in center of gravity of cargo) as obtained by the sensor and thereby determines whether the state of the object (cargo) is the predetermined state. Further, for example, in a case where the sensor 30 is a sensor that measures the height of cargo carried on the load-carrying platform of the vehicle 100, the second determiner 14 acquires the height of cargo and thereby determines whether the state of the object (cargo) is the predetermined state. An example of the predetermined state is a state where the cargo is estimated to endanger or discomfort its surroundings due to an action that the vehicle 100 takes in reaction to an influence exerted on the vehicle 100 by a nearby moving body. Specifically, the predetermined state is a state where the cargo is unfixed, a state where the cargo is on a swing, a state where the cargo is blocking view of the driver of the vehicle 100 or another vehicle around the vehicle 100, or a similar state. In these states, the cargo is estimated to endanger or discomfort its surroundings. For example, when the vehicle 100 suddenly accelerates, suddenly decelerates, or quickly turns due to an influence exerted thereon by a nearby moving body, cargo that is unfixed or on a swing may fall off the load-carrying platform or the vehicle 100 may collide with a vehicle hidden by cargo blocking view of the driver of the vehicle 100.

The chooser 15 chooses, on the basis of a result of detection acquired by the first determiner 13, an action, to be suggested to the vehicle 100 or to a particular moving body that is a moving body on which the vehicle 100 has been determined to exert an influence, for at least softening an influence that the moving body exerts on the vehicle 100 or an influence that the vehicle 100 exerts on the moving body. Specifically, the chooser 15 chooses the suggested action with use of a result of analysis acquired by the first determiner 13. In the following, a moving body to which the vehicle 100 suggests an action for at least softening an influence that the moving body exerts on the vehicle 100 or an influence that the vehicle 100 exerts on the moving body is also called "particular moving body".

For example, the particular moving body is another vehicle, and the suggested action may be movement control of that another vehicle. In a case where it has been determined that the particular moving body is trying to cut in front of the vehicle 100 and will therefore exert an influence on the vehicle 100, the suggested action is an action of not cutting in front of the vehicle 100. Further, in a case where it has been determined that the particular moving body is trying to run out of a road or the like crossing the lane in which the vehicle 100 is running and will therefore exert an influence on the vehicle 100, the suggested action is an action of not running out of the road or the like. Further, in a case where it has been determined that the particular moving body is trying to approach from ahead of or behind the vehicle 100 and will therefore exert an influence on the vehicle 100, the suggested action is an action of not reducing the intervehicular distance from the vehicle 100. Further, in a case where it has been determined that the particular moving body is trying to pass the vehicle 100 and will therefore exert an influence on the vehicle 100, the suggested action is an action of not passing the vehicle 100.

Further, in a case where it has been determined that the vehicle 100 is trying to cross the road on which the particular moving body is running and will therefore exert an influence on the particular moving body, the suggested action is an action of crossing the road earlier than the vehicle 100. For example, such a situation is conceivable that the vehicle 100 may yield right-of-way to the particular moving body when the vehicle 100 is carrying a standing passenger and therefore cannot suddenly accelerate. Further, in a case where it has been determined that the vehicle 100 is running on a road onto which the particular moving body is going to merge and will therefore exert an influence on the particular moving body, the suggested action is an action of merging in front of the vehicle 100. Further, in a case where the vehicle 100 is running in the lane into which the particular moving body is trying to cross over and will therefore exert an influence on the particular moving body, the suggested action is an action of crossing over into the lane.

Further, for example, the particular moving body is a person, and the suggested action is a movement or stoppage of the person. In a case where it has been determined that the particular moving body is trying to run out of a sidewalk onto a roadway and will therefore exert an influence on the vehicle 100, the suggested action is an action of stopping on the sidewalk. Further, in a case where it has been determined that the particular moving body is crossing a roadway and will therefore exert an influence on the vehicle 100, the suggested action is an action of moving from the roadway to a sidewalk.

Further, in a case where the vehicle 100 is trying to run on the road that the particular moving body is crossing and will therefore exert an influence on the particular moving body, the suggested action is an action of crossing the road earlier than the vehicle 100.

In a case where the first determiner 13 has determined that a moving body will exert an influence on the vehicle 100 or that the vehicle 100 will exert an influence on a moving body and in a case where the second determiner 14 has determined that the state of an object is the predetermined state, the notifier 16 makes, to the particular moving body, notification based on the suggested action chosen by the chooser 15. The notification is made by means of radio communication (intervehicular communication or optical communication with a vehicle or communication with communication device, such as a portable terminal or a wearable terminal, that a person has), a non-visible light projection that a person cannot recognize, visible light, an image, a sound, a vibration, or the like. The non-visible light projection is for example the act of projecting an image of non-visible light (e.g. an image indicating that the speed limit is 30 km/h) onto a road and causing a self-guided vehicle or the like to recognize the speed limit indicated by the image is set on the road on which it is currently running.

For example, in a case where the particular moving body is a self-guided vehicle, the notification is control information for the particular moving body to achieve the suggested action and is made by means of intervehicular communication, optical communication, a projection, or the like. For example, the notifier 16 notifies the self-guided vehicle by means of intervehicular communication, optical communication, a projection, or the like of control information that directly controls the behavior of the self-guided vehicle.

Further, for example, in a case where the particular vehicle is a manual operative vehicle, the notification is the presentation of an image, a sound, light, or a vibration indicating the suggested action and is made by means of intervehicular communication, optical communication, visible light, an image, a sound, a vibration, or the like. For example, the notifier 16 presents an image (character) and/or a sound via a display, a speaker, or the like situated on board the particular moving body to the driver of the manual operative vehicle as information that designates the behavior of the manual operative vehicle. Further, the notifier 16 designates the behavior of the manual operative vehicle to the driver of the manual operative vehicle by means of information that vibrates the steering wheel of the manual operative vehicle as information that designates the behavior of the manual operative vehicle. Further, the notifier 16 emits a directional sound or visible light toward the driver of the manual operative vehicle as information that designates the behavior of the manual operative vehicle.

Further, for example, in a case where the particular moving body is a person, the notification is the presentation of an image, a sound, light, or a vibration indicating the suggested action and is made by means of communication with a communication device that the person has, visible light, an image, a sound, a vibration, or the like. For example, the notifier 16 presents an image (character) and/or a sound via a display, a speaker, or the like of the communication device to the person as information that designates a movement or stoppage of the person. Further, by transmitting information that causes the communication device to vibrate to the communication device as information that designates a movement or stoppage of the person, the notifier 16 designates the person to move or stop. Further, the notifier 16 emits a directional sound or visible light toward the person as information that designates a movement or stoppage of the person.

The receiver 17 receives from the particular moving body a response to the notification made by the notifier 16, and the vehicle controller 18 controls the vehicle 100 according to the response. For example, in a case where the vehicle 100 is a self-guided vehicle, the vehicle controller 18 is a chassis ECU associated with control of the behavior or the like of the vehicle 100 such as "turn" or "stop", is connected to the steering, the engine, the brakes, and other parts, and outputs control information to these parts. Further, for example, in a case where the vehicle 100 is a manual operative vehicle, the vehicle controller 18 outputs image (character) information and/or sound information to a display, a speaker, or the like situated on board the vehicle 100 as control information that designates the behavior or the like of the vehicle 100 such as "turn" or "stop". Even in a case where the vehicle 100 is a self-guided vehicle, the vehicle controller 18 may output image (character) information and/or sound information to the display, the speaker, or the like situated on board the vehicle 100 as control information in order to notify an occupant of the vehicle 100. Further, even in a case where the vehicle 100 is a manual operative vehicle, the vehicle controller 18 may output control information to the steering, the engine, the brakes, and other parts in order to assist manual operation.

The information processing apparatus 10 (ECU) is an apparatus including, for example, a processor (microprocessor), a digital circuit such as a memory, an analog circuit, a communication circuit, and the like. The memory is a ROM, a RAM, or the like and can store a control program (computer program) that is executed by the processor. For example, by the processor operating in accordance with the control program (computer program), the information processing apparatus 10 achieves the various functions (the first acquirer 11, the second acquirer 12, the first determiner 13, the second determiner 14, the chooser 15, the notifier 16, the receiver 17, and the vehicle controller 18).

### 2. Operation of Information Processing Apparatus

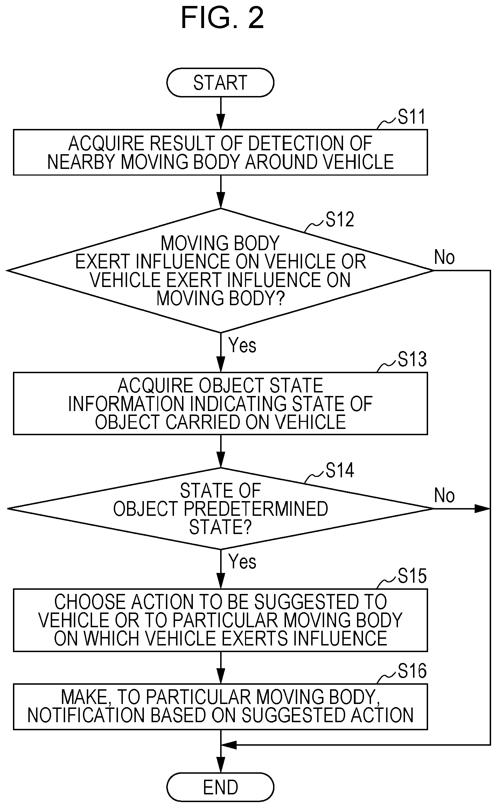

The following describes an operation of the information processing apparatus 10 with reference to Fig. 2.

Fig. 2 is a flow chart showing an example of an operation of the information processing apparatus 10 according to the embodiment. Fig. 2 shows an example of a basic operation of the information processing apparatus 10, and specific operations will be described in first to fourth examples below.

First, the first acquirer 11 acquires a result of detection of a nearby moving body around the vehicle 100 (step S11). Next, the first determiner 13 determines, on the basis of the result of detection acquired by the first acquirer 11, whether the nearby moving body exerts an influence on the vehicle 100 or whether the vehicle 100 exerts an influence on the nearby moving body (step S12). In a case where the first determiner 13 has determined that the nearby moving body exerts an influence on the vehicle 100 or that the vehicle 100 exerts an influence on the nearby moving body (Yes in step S12), the second acquirer 12 acquires object state information indicating the state of an object carried on the vehicle 100 (step S13). Next, the second determiner 14 determines whether the state of the object as indicated by the object state information is a predetermined state that is a state that possibly endangers or discomforts the object or its surroundings (step S14). In a case where the second determiner 14 has determined that the state of the object as indicated by the object state information is the predetermined state (Yes in step S14), the chooser 15 chooses an action to be suggested to the vehicle 100 or to a particular moving body that is a moving body on which the vehicle 100 has been determined to exert an influence (step S15).

It should be noted that the order in which steps S11 to S14 are executed is not limited to the order shown in Fig. 2. For example, a process may be performed in the order of step S13, step S14, step S11, and step S12. Alternatively, a process may be performed in the order of step S11, step S13, step S12, and step S14. Note here that steps S11 and S13 may be executed in reverse order and steps S12 and S14 may be executed in reverse order.

Therefore, in a case where the first determiner 13 has determined that the nearby moving body does not exert an influence on the vehicle 100 or that the vehicle 100 does not exert an influence on the nearby moving body (No in step S12) or in a case where the second determiner 14 has determined that the state of the object as indicated by the object state information is not the predetermined state (No in step S14), the information processing apparatus 10 performs nothing on the nearby moving body (i.e. does not execute step S15).

Then, the notifier 16 makes, to the particular moving body, notification based on the suggested action chosen by the chooser 15 (step S16).

The following describes specific operations of the information processing apparatus 10 with reference to four specific examples and another embodiment of each of the specific examples.

### 3-1. First Example

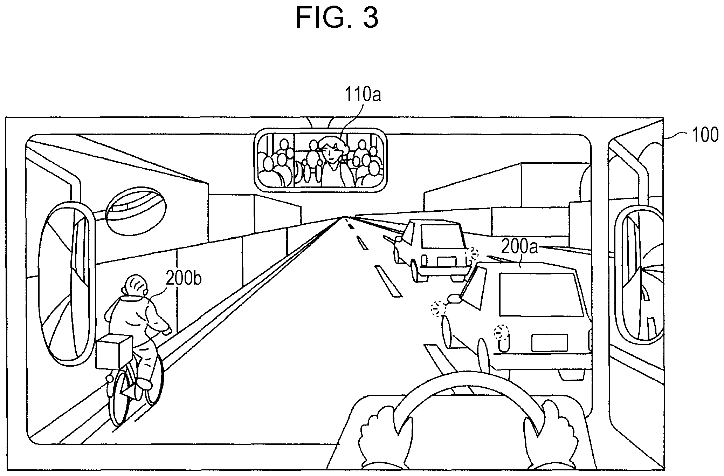

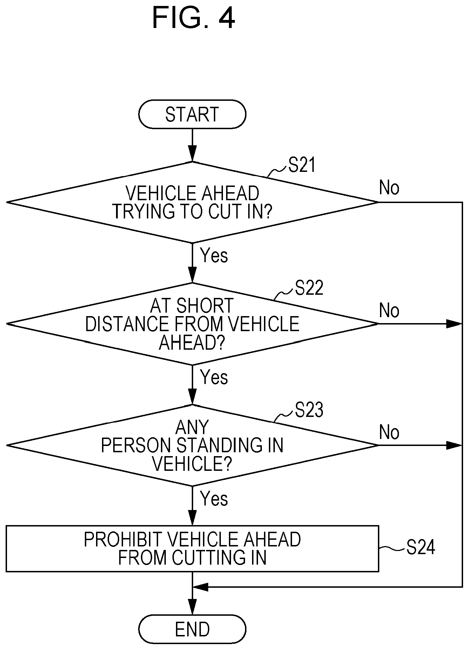

Fig. 3 is a diagram showing a running scenery as seen from inside the vehicle 100 in a first example. In the first example, the vehicle 100 is a bus. A moving body 200a (another vehicle) is running ahead of the vehicle 100 in a lane adjacent to the lane in which the vehicle 100 is running, and the moving body 200a is trying to cut in front of the vehicle 100. Further, an object 110a (occupant) carried on the vehicle 100 is standing. An operation of the information processing apparatus 10 in such a situation is described with reference to Fig. 4.

Fig. 4 is a flow chart showing an example of an operation of the information processing apparatus 10 in the first example.

First, the first determiner 13 determines whether the vehicle ahead (moving body 200a) is trying to cut in (step S21). That is, the first determiner 13 determines whether the moving body 200a exerts an influence on the vehicle 100 (or specifically, the moving body 200a cuts in front of the vehicle 100 to cause the vehicle 100 to perform a different action from an action that the vehicle 100 is currently performing). For example, by determining, with reference to an image that is obtained by photographing with the camera 20, whether that one of the turn signals on the moving body 200a which faces the lane in which the vehicle 100 is running is blinking, the first determiner 13 determines whether the moving body 200a is trying to cut in.

In a case where the first determiner 13 has determined that the moving body 200a is trying to cut in (Yes in step S21), the first determiner 13 determines that the vehicle 100 is at a short distance from the vehicle ahead (moving body 200a) (step S22). In other words, the first determiner 13 determines whether the distance between the vehicle 100 and the moving body 200a is not longer than a predetermined distance. The predetermined distance may be determined, for example, according to the number or amount of objects (in this example, the number of occupants) that are in the predetermined state (in this example, a standing state). For example, the larger the number of occupants who are in a standing state is, the more the predetermined distance is increased, as greater damage may be done when the vehicle 100 suddenly accelerates, suddenly decelerates, or quickly turns. That is, increasing the predetermined distance with increase in possibility of greater damage makes it possible to prevent the vehicle 100 from suddenly accelerating, suddenly decelerating, or quickly turning.

In a case where the first determiner 13 has determined that the vehicle 100 is at a short distance from the moving body 200a (Yes in step S22), the second determiner 14 determines whether there is any person (object 110a) standing in the vehicle 100 (step S23). That is, the second determiner 14 determines whether the state of the object 110a is the predetermined state (standing state). For example, the second determiner 14 determines, with reference to an image that is obtained by photographing with the sensor 30 (onboard camera), whether there is any person (object 110a) standing in the vehicle 100.

In a case where the second determiner 14 has determined that there is any person (object 110a) standing in the vehicle 100 (Yes in step S23), the chooser 15 chooses an action to be suggested to the particular moving body 200a, which is a moving body determined to exert an influence on the vehicle 100, and the notifier 16 makes, to the particular moving body 200a, notification based on the suggested action thus chosen. For example, the chooser 15 chooses, as the suggested action, an action of not letting the moving body 200a change lanes, and the notifier 16 makes, for example, the notification "please do not change lanes" to the moving body 200a. With this, the information processing apparatus 10 prohibits the moving body 200a from cutting in (step S24). At this point in time, the notifier 16 may also make notification that prohibits the cutting in of a nearby moving body estimated to exert an influence on the vehicle 100 at a future time.

In a case where there is no response to the notification or in a case where a response has been received to the effect that the suggested action is unacceptable, the vehicle 100 may collide with the moving body 200a if the moving body 200a cuts in and the vehicle 100 does not decelerate. In such a case, for example, the vehicle controller 18 of the information processing apparatus 10 causes the vehicle 100 to decelerate while trying as hard as possible not to suddenly decelerate.

In a case where the first determiner 13 has determined that the moving body 200a is not trying to cut in (No in step S21), in a case where the first determiner 13 has determined that the vehicle 100 is at a long distance from the moving body 200a (No in step S22), or in a case where the second determiner 14 has determined that that there is no person (object 110a) standing in the vehicle 100 (No in step S23), the information processing apparatus 10 performs nothing on a nearby moving body (i.e. does not execute step S24).

Since a bicycle (moving body 200b) is running ahead of the vehicle 100, the first determiner 13 may also determine whether the bicycle ahead (moving body 200b) is trying to cut in. For example, the first determiner 13 may determine an attribute of the driver of the moving body 200b, make a motion prediction by determining that the driver is an old person, and thereby determine that the moving body 200 is cutting in front of the vehicle 100 by wandering. In this case, for example, the chooser 15 chooses, as a suggested action, an action of not letting the moving body 200b wander, and the notifier 16 makes, for example, the notification "please do not wander" to the moving body 200b.

By thus prohibiting the moving body 200a or 200b from cutting in, the vehicle 100 is inhibited from suddenly decelerating and a danger associated with the object 110a, e.g. the falling over of a person carried on the vehicle 100, can be inhibited.

### 3-1a. Another Embodiment of First Example

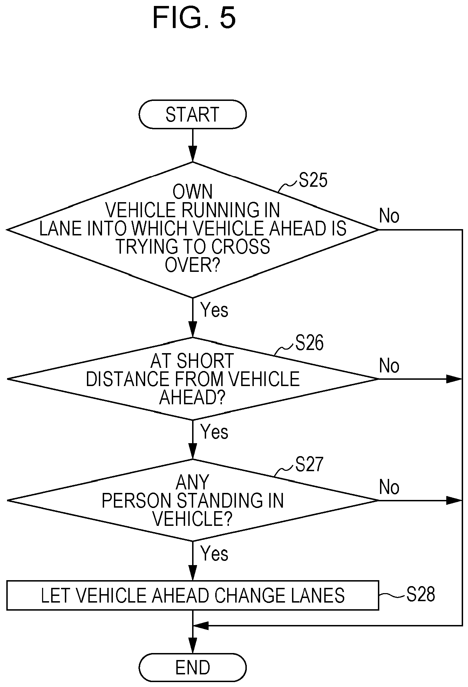

An operation of the information processing apparatus 10 in a situation similar to that shown in Fig. 3 above is described with reference to Fig. 5.

Fig. 5 is a flow chart showing an example of an operation of the information processing apparatus 10 in another embodiment of the first example.

First, the first determiner 13 determines whether the vehicle 100 is running in the lane into which the vehicle ahead (moving body 200a) is trying to cross over (step S25). That is, the first determiner 13 determines whether the vehicle 100 exerts an influence on the moving body 200a. For example, by determining, with reference to an image that is obtained by photographing with the camera 20, whether that one of the turn signals on the moving body 200a which faces the lane in which the vehicle 100 is running is blinking, the first determiner 13 determines whether the moving body 200a is trying to change lanes. By so doing, the first determiner 13 determines whether the vehicle 100 is running in the lane into which the vehicle ahead is planning to cross over.

In a case where the first determiner 13 has determined that the vehicle 100 is running in the lane into which the moving body 200a is trying to cross over (Yes in step S25), the first determiner 13 determines whether the vehicle 100 is at a short distance from the vehicle ahead (moving body 200a) (step S26). In other words, the first determiner 13 determines whether the distance between the vehicle 100 and the moving body 200a is not longer than a predetermined distance. The predetermined distance may be longer than the predetermined distance in the first example described above. Further, instead of or in addition to the distance between the vehicle 100 and the vehicle ahead, the first determiner 13 may determine whether a moving speed of the vehicle 100 or a relative speed of the vehicle 100 to the vehicle ahead is not higher than a predetermined speed. This makes it possible to let the moving body 200a change lanes first in a case where the vehicle 100 is running at such a low speed as to keep the moving body 200a waiting.

In a case where the first determiner 13 has determined that the vehicle 100 is at a short distance from the moving body 200a (Yes in step S26), the second determiner 14 determines whether there is any person (object 110a) standing in the vehicle 100 (step S27). This part of the process is similar to the aforementioned step S23 and is therefore not described here.

In a case where the second determiner 14 has determined that there is any person (object 110a) standing in the vehicle 100 (Yes in step S27), the chooser 15 chooses an action to be suggested to the particular moving body 200a, which is a moving body on which the vehicle 100 has been determined to exert an influence, and the notifier 16 makes, to the particular moving body 200a, notification based on the suggested action thus chosen. For example, the chooser 15 chooses, as the suggested action, an action of changing lanes before the vehicle 100 passes, and the notifier 16 makes, for example, the notification "please change lanes first" to the moving body 200a. With this, the information processing apparatus 10 lets the moving body 200a change lanes (step S28).

Since a bicycle (moving body 200b) is running ahead of the vehicle 100, the first determiner 13 may also determine whether the vehicle 100 is running on the road that the bicycle ahead (moving body 200b) is trying to cross. For example, the first determiner 13 may make a motion prediction of the moving body 200b and thereby determine whether the moving body 200 is trying to cross. In this case, for example, the chooser 15 chooses, as a suggested action, an action of letting the moving body 200b cross the road, and the notifier 16 makes, for example, the notification "please cross first" to the moving body 200b.

By thus letting the moving body 200a or 200b perform an action first, the vehicle 100 is inhibited from suddenly accelerating and a danger associated with the object 110a, e.g. the falling over of a person carried on the vehicle 100, can be inhibited. Moreover, a reduction in waiting time for the moving body 200a or 200b is achieved.

### 3-2. Second Example

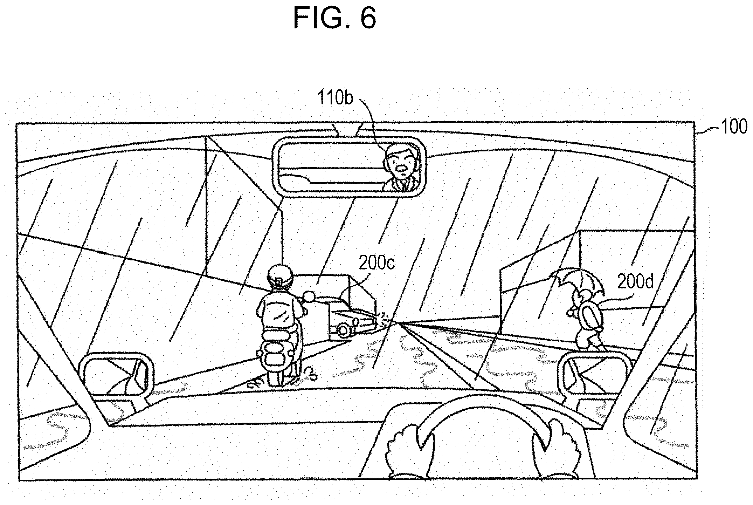

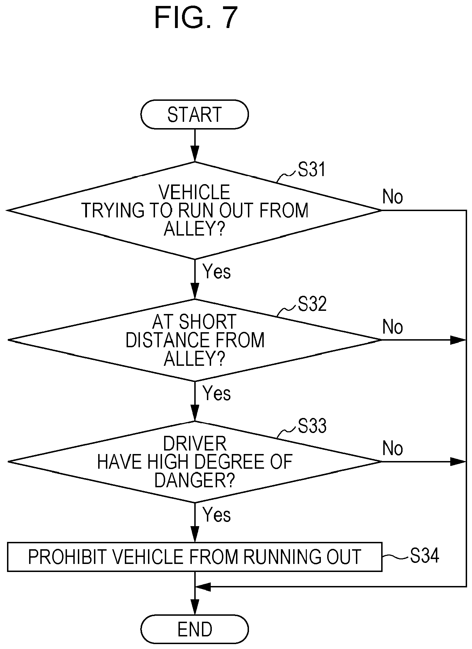

Fig. 6 is a diagram showing a running scenery as seen from inside the vehicle 100 in a second example. In the second example, the vehicle 100 is a regular vehicle. A moving body 200c (another vehicle) is present on an ally crossing the lane in which the vehicle 100 is running, and the moving body 200c is trying to run out of the alley. Further, it is assumed that an object 110b (driver) carried on the vehicle 100 has a high degree of danger. An operation of the information processing apparatus 10 in such a situation is described with reference to Fig. 7.

Fig. 7 is a flow chart showing an example of an operation of the information processing apparatus 10 in the second example.

First, the first determiner 13 determines whether the vehicle (moving body 200c) is trying to run out (step S31). That is, the first determiner 13 determines whether the moving body 200c exerts an influence on the vehicle 100 (or specifically, the moving body 200a runs out in front of the vehicle 100 to cause the vehicle 100 to perform a different action from an action that the vehicle 100 is currently performing). For example, by determining, with reference to an image that is obtained by photographing with the camera 20, whether the moving body 200c is on the alley and one of its turn signals is blinking, the first determiner 13 determines whether the moving body 200c is trying to run out.

In a case where the first determiner 13 has determined that the moving body 200c is trying to run out (Yes in step S31), the first determiner 13 determines whether the vehicle 100 is at a short distance from the alley (i.e. the moving body 200c) (step S32). In the other words, the first determiner 13 determines whether the distance between the vehicle 100 and the moving body 200c is not longer than a predetermined distance. The predetermined distance may be determined, for example, according to the surrounding environment. For example, in the case of an environment where, as shown in Fig. 6, the road is slippery due to rain (snow) or the like, the predetermined distance is increased, as greater damage may be done when the vehicle 100 suddenly accelerates, suddenly decelerates, or quickly turns. That is, increasing the predetermined distance with increase in possibility of greater damage makes it possible to prevent the vehicle 100 from suddenly accelerating, suddenly decelerating, or quickly turning.

In a case where the first determiner 13 has determined that the vehicle 100 is at a short distance from the alley (Yes in step S32), the second determiner 14 determines whether the driver (object 11 0b) has a high degree of danger (step S33). That is, the second determiner 14 determines whether the state of the object 110b is a predetermined state (highly dangerous state). For example, by determining, with reference to an image that is obtained by photographing with the sensor 30 (onboard camera), whether the driver is highly drowsy or has a high degree of fatigue, the second determiner 14 determines whether the driver (object 11 0b) has a high degree of danger.

In a case where the second determiner 14 has determined that the driver (object 110b) has a high degree of danger (Yes in step S33), the chooser 15 chooses an action to be suggested to the particular moving body 200c, which is a moving body determined to exert an influence on the vehicle 100, and the notifier 16 makes, to the particular moving body 200c, notification based on the suggested action thus chosen. For example, the chooser 15 chooses, as the suggested action, an action of causing the moving body 200c to stop, and the notifier 16 makes, for example, the notification "please stop" to the moving body 200c. With this, the information processing apparatus 100 prohibits the moving body 200c from running out (step S34).

In a case where there is no response to the notification or in a case where a response has been received to the effect that the suggested action is unacceptable, the vehicle 100 may collide with the moving body 200c if the moving body 200c runs out and the vehicle 100 does not decelerate. In such a case, for example, the vehicle controller 18 of the information processing apparatus 10 causes the vehicle 100 to decelerate while trying as hard as possible not to suddenly decelerate.

In a case where the first determiner 13 has determined that the moving body 200c is not trying to run out (No in step S31), in a case where the first determiner 13 has determined that the vehicle 100 is at a long distance from the alley (No in step S32), or in a case where the second determiner 14 has determined that that the driver (object 11 0a) has a low degree of danger (No in step S33), the information processing apparatus 10 performs nothing on a nearby moving body (i.e. does not execute step S34).

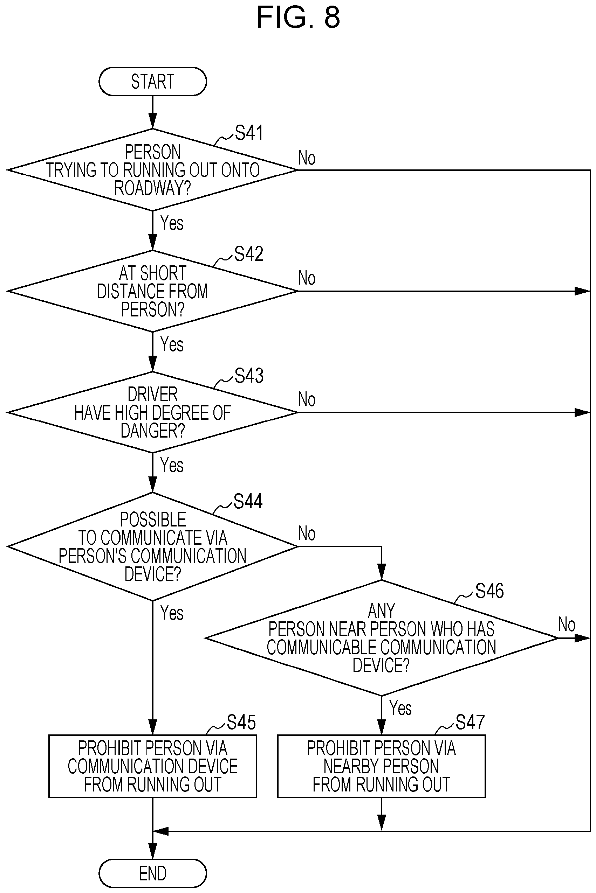

In the second example, a moving body 200d (person) is present ahead of the vehicle 100, and the moving body 200d is trying to run out of the sidewalk onto the roadway. An operation of the information processing apparatus 10 in such a situation is described with reference to Fig. 8.

Fig. 8 is a flow chart showing another example of an operation of the information processing apparatus 10 in the second example.

First, the first determiner 13 determines whether the person (moving body 200d) is trying to run out onto the roadway (step S41). That is, the first determiner 13 determines whether the moving body 200d exerts an influence on the vehicle 100 (or specifically, the moving body 200d runs out onto the roadway to cause the vehicle 100 to perform a different action from an action that the vehicle 100 is currently performing). For example, by determining, with reference to an image that is obtained by photographing with the camera 20, whether the moving body 200d is operating a mobile terminal or the like beside the roadway and not giving enough attention to its surrounding, the first determiner 13 determines whether the moving body 200d is trying to run out onto the roadway.

In a case where the first determiner 13 has determined that the moving body 200d is trying to run out onto the roadway (Yes in step S41), the first determiner 13 determines whether the vehicle 100 is at a short distance from the person (moving body 200d) (step S42). In the other words, the first determiner 13 determines whether the distance between the vehicle 100 the moving body 200d is not longer than a predetermined distance.

In a case where the first determiner 13 has determined that the vehicle 100 is at a short distance from the person (moving body 200d) (Yes in step S42), the second determiner 14 determines whether the driver (object 11 0b) has a high degree of danger (step S43).

In a case where the second determiner 14 has determined that the driver (object 110b) has a high degree of danger (Yes in step S43), the notifier 16 determines whether it is possible to communicate via a communication device that the person (moving body 200d) has (step S44). For example, by transmitting, to the moving body 200d, a signal that induces a response when received and determining whether there has been a response from the communication device that the moving body 200d has, the notifier 16 determines whether it is possible to communicate via the communication device that the moving body 200d has.

In a case where the notifier 16 has determined that it is possible to communicate via the communication device that the moving body 200d has (Yes in step S44), the chooser 15 chooses an action to be suggested to the particular moving body 200d, which is a moving body determined to exert an influence on the vehicle 100, and the notifier 16 makes, to the particular moving body 200d, notification based on the suggested action thus chosen. For example, the chooser 15 chooses, as the suggested action, an action of causing the moving body 200d to stop, and the notifier 16 causes the communication device to vibrate, causes the communication device to output the sound "please stop", or causes the communication device to glow, for example, in order to cause the moving body 200d to stop. With this, the information processing apparatus 10 prohibits the moving body 200d via the communication device from running out (step S45).

On the other hand, in a case where the notifier 16 has determined that it is impossible to communicate via the communication device that the person (moving body 200d) has (No in step S44), the notifier 16 determines whether there is a person near the person (moving body 200d) who has a communicable communication device (step S46). For example, by transmitting, to an area around the moving body 200d, a signal that induces a response when received and determining whether there has been a response from a communication device of a person near the person (moving body 200d), the notifier 16 determines whether there is a person near the moving body 200d who has a communicable communication device.

In a case where the notifier 16 has determined that there is a person near the person (moving body 200d) who has a communicable communication device (Yes in step S46), the chooser 15 chooses an action to be suggested to the particular moving body 200d, which is a moving body determined to exert an influence on the vehicle 100, and the notifier 16 makes, to the person near the particular moving body 200d, notification based on the suggested action thus chosen. For example, the chooser 15 chooses, as the suggested action, an action of causing the moving body 200d to stop, and the notifier 16 causes the communication device to vibrate, causes the nearby person's communication device to output the sound "please stop the person next to you" or causes it to display an image to that effect, for example, in order to cause the moving body 200d to stop. With this, the information processing apparatus 10 prohibits the moving body 200d via the nearby person from running out (step S47).

In a case where the first determiner 13 has determined that the moving body 200d is not trying to run out onto the roadway (No in step S41), in a case where the first determiner 13 has determined that the vehicle 100 is at a long distance from the person (No in step S42), or in a case where the second determiner 14 has determined that the driver (object 11 0b) has a low degree of danger (No in step S43), the information processing apparatus 10 performs nothing on a nearby moving body (i.e. does not execute step S45 or S47). Further, in a case where the notifier 16 has determined that there is no person near the person (moving body 200d) whose has a communicable communication device (No in step S46), the vehicle 100 may collide with the moving body 200c if and the vehicle 100 does not decelerate. In such a case, for example, the vehicle controller 18 of the information processing apparatus 10 causes the vehicle 100 to decelerate while trying as hard as possible not to suddenly decelerate.

By thus prohibiting the moving body 200c or 200d from running out, the vehicle 100 is inhibited from suddenly decelerating and therefore a danger associated with the object 110b, e.g. an accident that a person who has a high degree of danger (who is highly drowsy or has a high degree of fatigue) causes due to a delay in his/her decision to suddenly decelerate, can be inhibited.

### 3-2a. Another Embodiment of Second Example

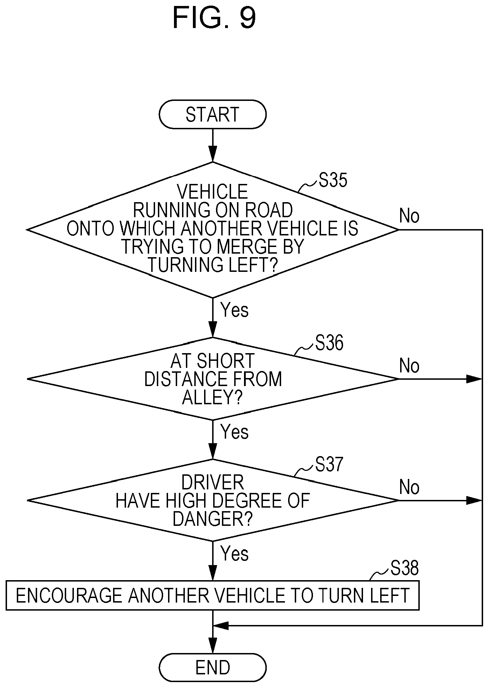

An operation of the information processing apparatus 10 in a situation similar to that shown in Fig. 6 above is described with reference to Fig. 9.

Fig. 9 is a flow chart showing an example of an operation of the information processing apparatus 10 in another embodiment of the second example.

First, the first determiner 13 determines whether the vehicle 100 is running on the road onto which a different vehicle (moving body 200c) is trying to merge by turning left (step S35). That is, the first determiner 13 determines whether the vehicle 100 exerts an influence on the moving body 200c. For example, by determining, with reference to an image that is obtained by photographing with the camera 20, whether the moving body 200c is on an alley and a turn signal is blinking, the first determiner 13 determines whether the moving body 200c is trying to merge by turning left. By so doing, the first determiner 13 determines whether the vehicle 100 is running on the road onto which the different vehicle is planning to merge.

In a case where the first determiner 13 has determined that the vehicle 100 is running on the road onto which the moving body 200c is trying to merge by turning left (Yes in step S35), the first determiner 13 determines whether the vehicle 100 is at a short distance from the alley (i.e. the moving body 200c) (step S36). In other words, the first determiner 13 determines whether the distance between the vehicle 100 and the moving body 200c is not longer than a predetermined distance. The predetermined distance may be longer than the predetermined distance in the second example described above. Further, instead of or in addition to the distance between the vehicle 100 and the vehicle ahead (moving body 200c), the first determiner 13 may determine whether a moving speed of the vehicle 100 or a relative speed of the vehicle 100 to the vehicle ahead is not higher than a predetermined speed. This makes it possible to let the moving body 200c turn left first in a case where the vehicle 100 is running at such a low speed as to keep the moving body 200c waiting.

In a case where the first determiner 13 has determined that the vehicle 100 is at a short distance from the alley (Yes in step S36), the second determiner 14 determines whether the driver (object 110b) has a high degree of danger (step S37). This part of the process is similar to the aforementioned step S33 and is therefore not described here.

In a case where the second determiner 14 has determined that the driver (object 110b) has a high degree of danger (Yes in step S37), the chooser 15 chooses an action to be suggested to the particular moving body 200c, which is a moving body on which the vehicle 100 has been determined to exert an influence, and the notifier 16 makes, to the particular moving body 200c, notification based on the suggested action thus chosen. For example, the chooser 15 chooses, as the suggested action, an action of letting the moving body 200c turn left, and the notifier 16 makes, for example, the notification "please turn left first" to the moving body 200c. With this, the information processing apparatus 10 encourages the moving body 200c to turn left (step S38).

By thus letting the moving body 200c turn left first, the vehicle 100 can be inhibited from suddenly accelerating. This makes it possible to inhibit a danger associated with the object 110b, e.g. an accident that is caused by a hasty operation performed by a driver who has delayed in decision making due to a high degree of danger, i.e. high drowsiness or a high degree of fatigue. Moreover, a reduction in waiting time for the moving body 200c is achieved.

### 3-3. Third Example

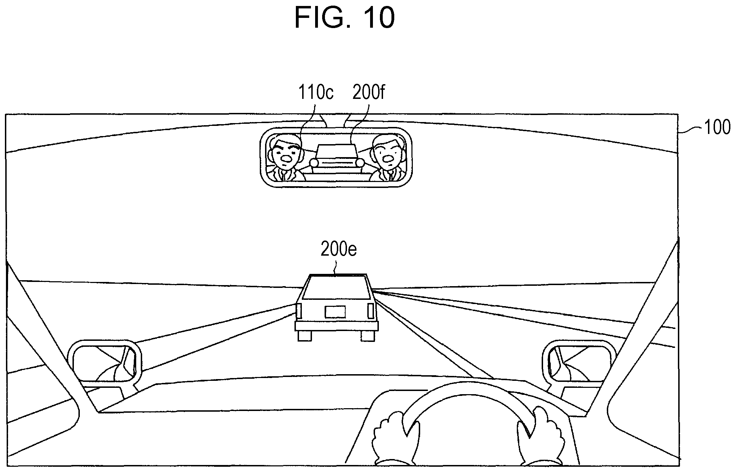

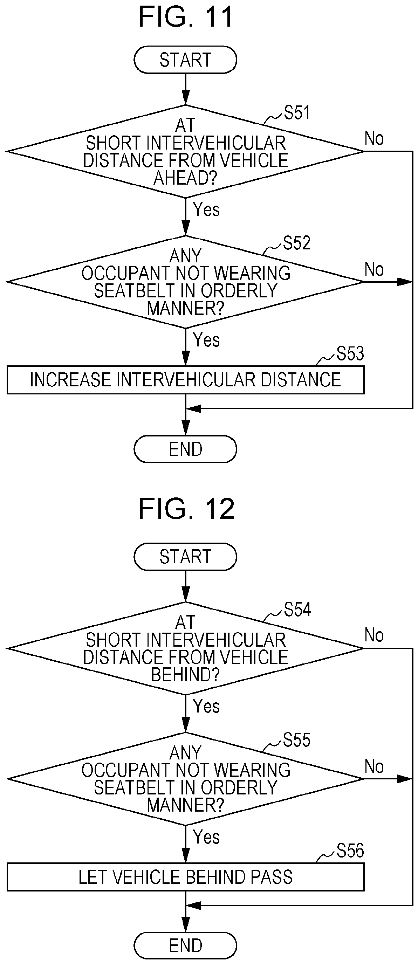

Fig. 10 is a diagram showing a running scenery as seen from inside the vehicle 100 in a third example. In the third example, the vehicle 100 is a regular vehicle. A moving body 200e (another vehicle) is running ahead of the vehicle 100 in the lane in which the vehicle 100 is running. Further, it is assumed that an object 110c (occupant) carried on the vehicle 100 is not wearing a seatbelt in an orderly manner. An operation of the information processing apparatus 10 in such a situation is described with reference to Fig. 11.

Fig. 11 is a flow chart showing an example of an operation of the information processing apparatus 10 in the third example.

First, the first determiner 13 determines whether the vehicle 100 is at a short intervehicular distance from the vehicle ahead (moving body 200e) (step S51). In other words, the first determiner 13 determines whether the distance between the vehicle 100 and the moving body 200e is not longer than a predetermined distance. The predetermined distance may be determined, for example, according to the surrounding environment or the number or amount of objects (in this example, the number of occupants) that are in a predetermined state (in this example, a state of not wearing a seatbelt in an orderly manner). For example, by measuring the intervehicular distance between the vehicle 100 and the moving body 200e with reference to an image that is obtained by photographing with the camera 20, the first determiner 13 determines whether the vehicle 100 is at a short intervehicular distance from the moving body 200e.

In a case where the first determiner 13 has determined that the vehicle 100 is at a short distance from the vehicle ahead (moving body 200e) (Yes in step S51), the second determiner 14 determines whether there is an occupant (object 110c) who is not wearing a seatbelt in an orderly manner (step S52). That is, the second determiner 14 determines whether the state of the object 110c is the predetermined state (state of not wearing a seatbelt in an orderly manner). For example, the second determiner 14 determines, with reference to an image that is obtained by photographing with the sensor 30 (onboard camera), whether there is an occupant (object 110c) who is not wearing a seatbelt in an orderly manner.

In a case where the second determiner 14 has determined that there is an occupant (object 110c) who is not wearing a seatbelt in an orderly manner (Yes in step S52), the chooser 15 chooses an action to be suggested to the particular moving body 200e, which is a moving body determined to exert an influence on the vehicle 100, and the notifier 16 makes, to the particular moving body 200e, notification based on the suggested action thus chosen. For example, the chooser 15 chooses, as the suggested action, an action of letting the moving body 200e accelerate, and the notifier 16 makes, for example, the notification "please accelerate" to the moving body 200e. With this, the information processing apparatus 10 causes the moving body 200e to increase the intervehicular distance from the vehicle 100 (step S53). How long the intervehicular distance should be may be determined, for example, according to the surrounding environment or the number or amount of objects (in this example, the number of occupants) that are in the predetermined state (in this example, a state of not wearing a seatbelt in an orderly manner). Further, the chooser 15 may choose, as the suggested action, an action of not letting the moving body 200e further decelerate, and the notifier 16 may make, for example, the notification "please do not decelerate" to the moving body 200e.

In a case where there is no response to the notification or in a case where a response has been received to the effect that the suggested action is unacceptable, the vehicle 100 may collide with the moving body 200e if the moving body 200e approaches and the vehicle 100 does not decelerate. In such a case, for example, the vehicle controller 18 of the information processing apparatus 10 causes the vehicle 100 to decelerate while trying as hard as possible not to suddenly decelerate.

In a case where the first determiner 13 has determined that the vehicle 100 is at a long distance from the vehicle ahead (moving body 200e) (No in step S51) or in a case where the second determiner 14 has determined that there is no occupant (object 110c) who is not wearing a seatbelt in an orderly manner (No in step S52), the information processing apparatus 10 performs nothing on a nearby moving body (i.e. does not execute step S53).

Since a vehicle behind (moving body 200f) is running behind the vehicle 100, the first determiner 13 may determine whether the vehicle 100 is at a short intervehicular distance from the vehicle behind (moving body 200f). In this case, for example, the chooser 15 chooses, as a suggested action, an action of causing the moving body 200f to decelerate, and the notifier 16 makes, for example, the notification "please decelerate" to the moving body 200f.

By thus causing the moving body 200e or 200f to increase the intervehicular distance from the vehicle 100, the vehicle 100 is inhibited from suddenly decelerating or suddenly accelerating and a danger associated with the object 110c, e.g. the endangering of a person who is not wearing a seatbelt in an orderly manner, can be inhibited.

### 3-3a. Another Embodiment of Third Example

An operation of the information processing apparatus 10 in a situation similar to that shown in Fig. 10 above is described with reference to Fig. 12.

Fig. 12 is a flow chart showing an example of an operation of the information processing apparatus 10 in another embodiment of the third example.

First, the first determiner 13 determines whether the vehicle 100 is at a short intervehicular distance from the vehicle behind (moving body 200f) (step S54). In other words, the first determiner 13 determines whether the vehicle 100 exerts an influence on the moving body 200f. Specifically, the first determiner 13 determines whether the distance between the vehicle 100 and the moving body 200f is not longer than a predetermined distance. The predetermined distance may be longer than the predetermined distance in the third example described above. Further, instead of or in addition to the distance between the vehicle 100 and the moving body 200f, the first determiner 13 may determine whether a moving speed of the vehicle 100 or a relative speed of the vehicle 100 to the moving body 200f is not higher than a predetermined speed. This makes it possible to let the moving body 200f pass in a case where the vehicle 100 is running at such a low speed as to keep the moving body 200f waiting.

In a case where the first determiner 13 has determined that the vehicle 100 is at a short distance from the vehicle behind (moving body 200f) (Yes in step S54), the second determiner 14 determines whether there is an occupant (object 110c) who is not wearing a seatbelt in an orderly manner (step S55). This part of the process is similar to the aforementioned step S52 and is therefore not described here.

In a case where the second determiner 14 has determined that there is an occupant (object 110c) who is not wearing a seatbelt in an orderly manner (Yes in step S55), the chooser 15 chooses an action to be suggested to the particular moving body 200f, which is a moving body on which the vehicle 100 has been determined to exert an influence, and the notifier 16 makes, to the particular moving body 200f, notification based on the suggested action thus chosen. For example, the chooser 15 chooses, as the suggested action, an action of letting the moving body 200f pass, and the notifier 16 makes, for example, the notification "after you" to the moving body 200f. With this, the information processing apparatus 10 lets the moving body 200f pass the vehicle 100 (step S56). In addition to choosing the action of letting the moving body 200f pass, the chooser 15 may also choose an action of causing the vehicle 100 to decelerate.

By thus letting the moving body 200f pass the vehicle 100, the vehicle 100 is inhibited from suddenly accelerating and a danger associated with the object 110c, e.g. the endangering or discomforting of a person who is not wearing a seatbelt in an orderly manner, can be inhibited. Moreover, a reduction in waiting time for the moving body 200f behind the vehicle 100 is achieved.

### 3-4. Fourth Example

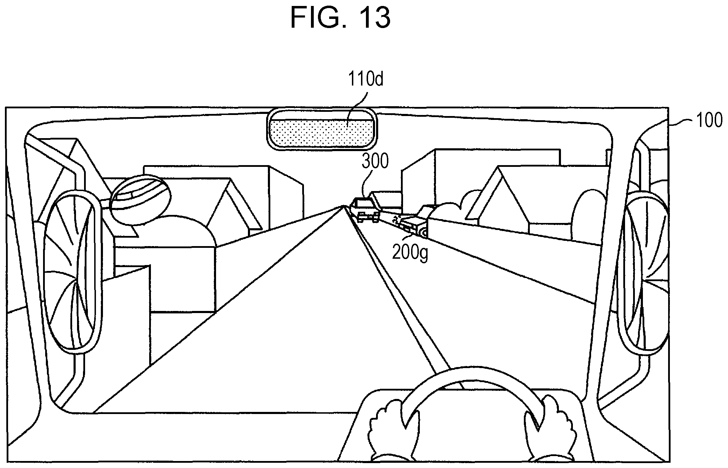

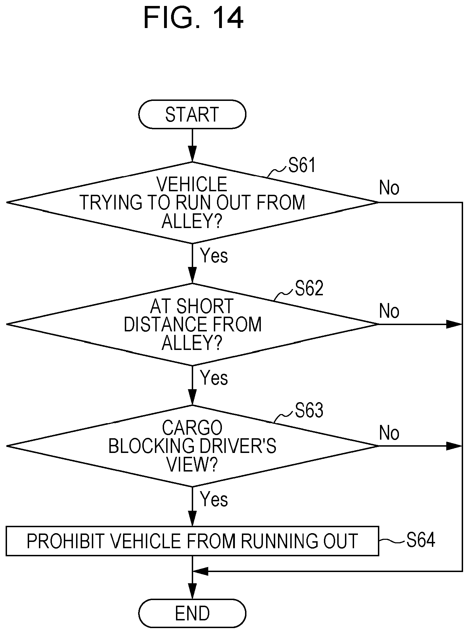

Fig. 13 is a diagram showing a running scenery as seen from inside the vehicle 100 in a fourth example. In the fourth example, the vehicle 100 is a truck. A moving body 200g (another vehicle) is present on an ally crossing the lane in which the vehicle 100 is running, and the moving body 200g is trying to run out of the alley. Further, in Fig. 13, an object 110d (cargo) is reflected in a greater part of the rear-view mirror, and the cargo carried on the vehicle 100 is blocking view of the driver of the vehicle 100. An operation of the information processing apparatus 10 in such a situation is described with reference to Fig. 14.

Fig. 14 is a flow chart showing an example of an operation of the information processing apparatus 10 in the fourth example.

First, the first determiner 13 determines whether the vehicle (moving body 200g) is trying to run out (step S61). That is, the first determiner 13 determines whether the moving body 200g exerts an influence on the vehicle 100 (or specifically, the moving body 200g runs out in front of the vehicle 100 to cause the vehicle 100 to perform a different action from an action that the vehicle 100 is currently performing). For example, by determining, with reference to an image that is obtained by photographing with the camera 20, whether the moving body 200g is on the alley and one of its turn signals is blinking, the first determiner 13 determines whether the moving body 200g is trying to run out. In some case, it is impossible to see, from the vehicle 100, whether the moving body 200g is trying to run out of the alley. Therefore, the information processing apparatus 10 may acquire, from another moving body 300 that can confirm the situation on the alley, information indicating whether the vehicle (moving body 200g) is trying to run out, whereby the first determiner 13 may determine whether the vehicle (moving body 200g) is trying to run out.

In a case where the first determiner 13 has determined that the moving body 200g is trying to run out (Yes in step S61), the first determiner 13 determines whether the vehicle 100 is at a short distance from the alley (i.e. the moving body 200g) (step S62). In the other words, the first determiner 13 determines whether the distance between the vehicle 100 and the moving body 200g is not longer than a predetermined distance. The predetermined distance may be determined, for example, according to the surrounding environment.

In a case where the first determiner 13 has determined that the vehicle 100 is at a short distance from the alley (Yes in step S62), the second determiner 14 determines whether the cargo (object 110d) is blocking the driver's view (step S63). That is, the second determiner 14 determines whether the state of the object 110d is a predetermined state (state of blocking the driver's view). For example, the second determiner 14 determines, with reference to an image that is obtained by photographing with the sensor 30 (onboard camera), whether the cargo (object 110d) is blocking the driver's view.

In a case where the second determiner 14 has determined that the cargo (object 110d) is blocking the driver's view (Yes in step S63), the chooser 15 chooses an action to be suggested to the particular moving body 200g, which is a moving body determined to exert an influence on the vehicle 100, and the notifier 16 makes, to the particular moving body 200g, notification based on the suggested action thus chosen. For example, the chooser 15 chooses, as the suggested action, an action of causing the moving body 200g to stop, and the notifier 16 makes the notification "please stop" to the moving body 200g. With this, the information processing apparatus 10 prohibits the moving body 200g from running out (step S64).

In a case where there is no response to the notification or in a case where a response has been received to the effect that the suggested action is unacceptable, the vehicle 100 may collide with the moving body 200g if the moving body 200g runs out and the vehicle 100 does not decelerate. In such a case, for example, the vehicle controller 18 of the information processing apparatus 10 causes the vehicle 100 to decelerate while trying as hard as possible not to suddenly decelerate.

In a case where the first determiner 13 has determined that the moving body 200g is not trying to run out (No in step S61), in a case where the first determiner 13 has determined that the vehicle 100 is at a long distance from the alley (No in step S62), or in a case where the second determiner 14 has determined that that the cargo (object 110d) is not blocking the driver's view (No in step S63), the information processing apparatus 10 performs nothing on a nearby moving body (i.e. does not execute step S64).

By thus prohibiting the moving body 200g from running out, the vehicle 100 is inhibited from suddenly decelerating and therefore a danger associated with the object 110d, e.g. a collision with the vehicle 100 of a vehicle behind the vehicle 100 that the object 110d is blocking the driver from seeing, can be inhibited.

### 3-4a. Another Embodiment of Fourth Example

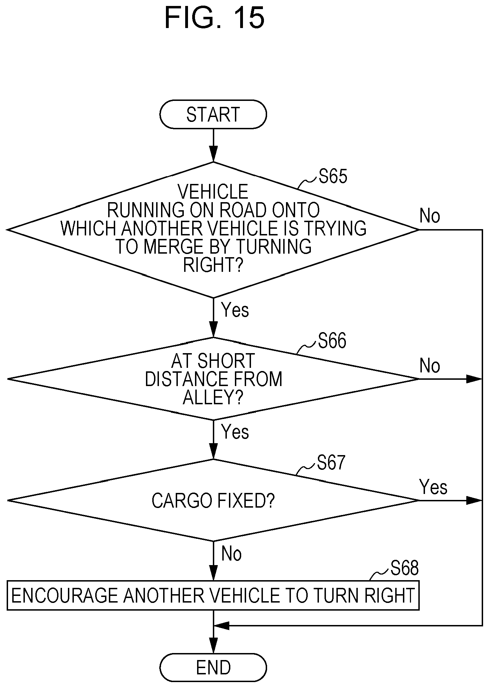

The situation is similar to that shown in Fig. 13 except for the state of the object 110d. In this example, the object 110d is unfixed. An operation of the information processing apparatus 10 is such a situation is described with reference to Fig. 15.

Fig. 15 is a flow chart showing an example of an operation of the information processing apparatus 10 in another embodiment of the fourth example.

First, the first determiner 13 determines whether the vehicle 100 is running on the road onto which a different vehicle (moving body 200g) is trying to merge by turning right (step S65). That is, the first determiner 13 determines whether the vehicle 100 exerts an influence on the moving body 200g.

In a case where the first determiner 13 has determined that the vehicle 100 is running on the road onto which the moving body 200g is trying to merge by turning right (Yes in step S65), the first determiner 13 determines whether the vehicle 100 is at a short distance from the alley (i.e. the moving body 200g) (step S66). In other words, the first determiner 13 determines whether the distance between the vehicle 100 and the moving body 200g is not longer than a predetermined distance. The predetermined distance may be longer than the predetermined distance in the fourth example described above. Further, instead of or in addition to the distance between the vehicle 100 and the moving body 200g, the first determiner 13 may determine whether a moving speed of the vehicle 100 or a relative speed of the vehicle 100 to the moving body 200g is not higher than a predetermined speed. This makes it possible to let the moving body 200g merge first in a case where the vehicle 100 is running at such a low speed as to keep the moving body 200g waiting.

In a case where the first determiner 13 has determined that the vehicle 100 is at a short distance from the alley (Yes in step S66), the second determiner 14 determines whether the cargo (object 110d) is fixed (step S67). That is, the second determiner 14 determines whether the state of the object 110d is a predetermined state (movable state). For example, the second determiner 14 determines, with reference to an image that is obtained by photographing with the sensor 30 (onboard camera), whether the cargo (object 110d) is fixed by a restraining device.

In a case where the second determiner 14 has determined that the cargo (object 110d) is unfixed (No in step S67), the chooser 15 chooses an action to be suggested to the particular moving body 200g, which is a moving body on which the vehicle 100 has been determined to exert an influence, and the notifier 16 makes, to the particular moving body 200g, notification based on the suggested action thus chosen. For example, the chooser 15 chooses, as the suggested action, an action of letting the moving body 200g turn right, and the notifier 16 makes, for example, the notification "please turn right first" to the moving body 200g. With this, the information processing apparatus 10 lets the moving body 200g turn right first (step S68).

By thus letting the moving body 200g turn right first, the vehicle 100 can be inhibited from suddenly accelerating and therefore a danger associated with the object 110d, e.g. the falling of the object 110d due to sudden acceleration, can be inhibited. Moreover, a reduction in waiting time for the moving body 200g is achieved.

### 4. Effects and the Like

As described above, for example, when, in a case where the state of an object carried on the vehicle 100 is a predetermined state, the vehicle 100 has an influence exerted thereon by a particular moving body or the vehicle 100 exerts an influence on the particular moving body, the vehicle 100 needs to, for example, suddenly accelerate, suddenly decelerate, or quickly turn in order to soften the influence, so that there may occur a dangerous condition associated with the object. The present disclosure makes it possible to suggest to the particular moving object that the particular moving object take such an action that the vehicle 100 has no influence exerted thereon by the particular moving body, i.e. such an action that there occurs no dangerous condition associated with the object, thus eliminating the need for the vehicle 100 on which the object is being carried to, for example, suddenly accelerate, suddenly decelerate, or quickly turn. This makes it possible to more effectively prevent a dangerous or uncomfortable situation.

Further, by making, to the particular moving body, notification based on the suggested action thus chosen, the vehicle 100 can keep performing the action that it is currently performing or, specifically, the acceleration or angular speed of the vehicle 100 is inhibited from becoming not lower than a predetermined threshold, so that the occurrence of a dangerous or uncomfortable situation associated with the object can be inhibited. Further, it is conceivable that in a case where the vehicle 100 is trying to cross the road on which the particular moving body is running and causes the particular moving body to cancel (e.g. stop) an action (e.g. straight-ahead driving) that the particular moving body is planning to perform at a future time, the vehicle 100 may accelerate so as not to cause the particular moving body to stop or the vehicle 100 may accelerate so as to cause the particular moving body to stop for as short a period of time as possible. However, by making, to the particular moving body, the notification based on the suggested action thus chosen, the vehicle 100 can for example let the particular moving body cross the road earlier than the vehicle 100. Therefore, the vehicle 100 does not need to accelerate in order to inhibit the occurrence of a dangerous or uncomfortable situation associated with the object.

For example, as a dangerous or uncomfortable situation associated with the object, an occupant who is standing, an occupant who is not holding onto a fixture, an occupant who is not wearing a seatbelt in an orderly manner, or a child being held by an occupant can be inhibited from being endangered. Further, for example, as a dangerous or uncomfortable situation associated with the object, cargo that is in an unstable state or cargo that is blocking the driver's view can be inhibited from endangering or discomforting its surroundings.

Further, for example, a dangerous or uncomfortable situation associated with the object may cause greater damage or exert a greater influence when the number of amount of such objects is larger. Therefore, a dangerous or uncomfortable situation can be more effectively prevented by choosing a suggested action according to the number or amount of objects that are in the predetermined state.

Further, depending on a response to the notification made to the particular moving body, the vehicle 100 may need to perform vehicle control in order to prevent a dangerous or uncomfortable situation. Therefore, a dangerous or uncomfortable situation can be more effectively prevented by controlling the vehicle 100 according to the response.

Further, in a case where the particular moving body is another vehicle, a dangerous or uncomfortable situation can be more effectively prevented by making, to that another vehicle, notification based on movement control of that another vehicle. Further, in a case where the particular moving body is a person, a dangerous or uncomfortable situation can be more effectively prevented by making, to the person, notification based on a movement or stoppage of the person. Further, since the notification is control information for achieving the suggested action, the particular moving body (e.g. another vehicle) can be controlled by the control information in order to achieve the suggested action. Other Embodiments

Although the foregoing has described an information processing apparatus 10 of the present disclosure according to an embodiment, the present disclosure is not limited to the embodiment.

For example, the predetermined state that the second determiner 14 determines may be a state where the load-carrying platform of the vehicle 100 is provided with no gate enclosing the load-carrying platform. In this case, the cargo may fall from the load-carrying platform to endanger its surroundings.

Further, for example, the notification that the notifier 16 makes may be notification of the state of the vehicle 100 (e.g. a state where the vehicle 100 cannot suddenly accelerate, suddenly decelerate, or quickly turn).

Further, for example, the notifier 16 makes notification to the particular moving body in a case where the first determiner 13 has determined that the distance between the vehicle 100 and the particular moving body is not longer than a predetermined distance, and this predetermined distance may be determined according to the position of the vehicle 100. For example, in a case where the first determiner 13 has determined that the vehicle 100 is currently in the vicinity of an intersection, the predetermined distance is increased. This is because the vehicle 100 is more likely to suddenly accelerate, suddenly decelerate, or quickly turn in the vicinity of an intersection. The first determiner 13 determines the current presence of the vehicle 100 in the vicinity of an intersection, for example, with use of machine learning based on an image that is obtained by photographing with the camera 20, information acquired from an infrastructure (such as a roadside machine) or a GPS, information acquired from another vehicle, or the like.

Although the aforementioned embodiment has described an example in which the information processing apparatus 10 situated on board the vehicle 100 performs a process, an infrastructure (such as a roadside machine) may perform a process. For example, the information processing apparatus 10 may provide the infrastructure with information indicating a suggested action chosen by the chooser 15 and information indicating a destination of notification of the action, and the infrastructure may notify the suggested action to the destination of notification. Further, the information processing apparatus 10 may provide the infrastructure with data that is obtained from the camera 20 and the sensor 30, and the infrastructure may execute processes that are equivalent to those which are executed by the first determiner 13, the second determiner 14, the chooser 15, and the notifier 16.

It should be noted that the present disclosure cannot only be realized as an information processing apparatus 10 but can also be realized as an information processing method including steps (processes) that are executed by constituent elements constituting the information processing apparatus 10.

Specifically, the information processing method includes steps described in claim 11 of the appended claims.

For example, those steps may be executed by a computer (computer system). Moreover, the present disclosure can be realized as a program for causing a computer to execute those steps included in the method. Furthermore, the present disclosure can be realized as a non-transitory computer-readable recording medium, such as a CD-ROM, storing the program thereon.

For example, in a case where the present disclosure is realized by a program (software), each step is executed by the program being executed using hardware resources such as a CPU, a memory, an input/output circuit, and the like of a computer. That is, each step is executed by the CPU performing a computation by acquiring data from the memory, the input/output circuit, or the like and outputting a computation result to the memory, the input/output circuit, or the like.

Further, the plurality of constituent elements included in the information processing apparatus 10 according to the embodiment may each be realized as a dedicated or general-purpose circuit. These constituent elements may be realized as a single circuit or may be realized as a plurality of circuits.

Further, the plurality of constituent elements included in the information processing apparatus 10 according to the embodiment may be realized as LSI (large-scale integration), which is an integrated circuit (IC). These constituent elements may individually take the form of a single chip or may take the form of a single chip that includes some or all of them. The LSI may be called "system LSI", "super LSI", or "ultra LSI", depending on different degrees of integration.

Further, the integrated circuit is not limited to the LSI but may be realized by a dedicated circuit or a general-purpose processor. An FGPA (field programmable gate array) that can be programmed or a reconfigurable processor that allows reconfiguration of the connection and setup of circuit cells inside the LSI can be used.

## Claims

1. An information processing apparatus (10) comprising:
a processor; and
a non-transitory recording medium storing thereon a computer program, which when executed by the processor, causes the processor to perform operations including:
acquiring a result of detection of a moving body (200a, 200b, 200c, 200d, 200e, 200f, 200g, 300) around a vehicle (100);
acquiring passenger state information indicating a state of a passenger carried on the vehicle (100);
determining, on the basis of the result of detection, whether there is a risk of collision between the moving body (200a, 200b, 200c, 200d, 200e, 200f, 200g, 300) and the vehicle (100);
determining whether the state of the passenger as indicated by the passenger state information is a predetermined state where the passenger is estimated to be endangered or discomforted by an action that the vehicle (100) would take to avoid the risk of collision between the moving body (200a, 200b, 200c, 200d, 200e, 200f, 200g, 300) and the vehicle (100);
determining, in response to determining that the state of the passenger is in the predetermined state, an action to be performed by the moving body (200a, 200b, 200c, 200d, 200e, 200f, 200g, 300) for reducing the risk of collision between the moving body (200a, 200b, 200c, 200d, 200e, 200f, 200g, 300) and the vehicle (100); and
notifying the action to be performed to the moving body (200a, 200b, 200c, 200d, 200e, 200f, 200g, 300) based on the determined action when determining that the state of the passenger is in the predetermined state and that there is the risk of collision between the moving body (200a, 200b, 200c, 200d, 200e, 200f, 200g, 300) and the vehicle (100).

2. The information processing apparatus (10) according to claim 1, wherein the action causes an acceleration or angular speed of the vehicle (100) to become higher than a predetermined threshold.

3. The information processing apparatus (10) according to claim 1, wherein the risk of the collision that the vehicle (100) exerts on the moving body causes the moving body (200a, 200b, 200c, 200d, 200e, 200f, 200g, 300) to cancel or postpone an action that the moving body (200a, 200b, 200c, 200d, 200e, 200f, 200g, 300) is planning to perform at a future time.

4. The information processing apparatus (10) according to claim 1, wherein the predetermined state is a state where the passenger is standing, a state where the passenger is not holding onto a fixture fixed in position in the vehicle (100), a state where the passenger is not wearing a seatbelt in an orderly manner, or a state where the passenger is holding a child.

5. The information processing apparatus (10) according to claim 1, wherein the determining of the action includes determining the action according to a number of passengers that are in the predetermined state.

6. The information processing apparatus (10) according to claim 1, wherein the operations further include:
receiving a response to the notification; and
controlling the vehicle (100) according to the response.

7. The information processing apparatus (10) according to claim 1, wherein the moving body (200a, 200b, 200c, 200d, 200e, 200f, 200g, 300) is another vehicle (100), and
the determined action is movement control of that another vehicle (100).

8. The information processing apparatus (10) according to claim 1, wherein the moving body (200a, 200b, 200c, 200d, 200e, 200f, 200g, 300) is a person, and
the determined action is a movement or stoppage of the person.

9. The information processing apparatus (10) according to claim 1, wherein the notifying includes notifying control information for achieving the determined action.

10. The information processing apparatus (10) according to claim 1, wherein the notifying includes notifying presentation of an image, a sound, or a vibration indicating the determined action.

11. An information processing method comprising:
acquiring a result of detection of a moving body (200a, 200b, 200c, 200d, 200e, 200f, 200g, 300) around a vehicle (100);
acquiring passenger state information indicating a state of a passenger carried on the vehicle (100);
determining, on the basis of the result of detection, whether there is a risk of collision between the moving body (200a, 200b, 200c, 200d, 200e, 200f, 200g, 300) and the vehicle (100);
determining whether the state of the passenger as indicated by the passenger state information is a predetermined state where the passenger is estimated to be endangered or discomforted by an action that the vehicle (100) would take to avoid the risk of collision between the moving body (200a, 200b, 200c, 200d, 200e, 200f, 200g, 300) and the vehicle (100);
determining, in response to determining that the state of the passenger is in the predetermined state, an action to be performed by the moving body (200a, 200b, 200c, 200d, 200e, 200f, 200g, 300) for reducing the risk of collision between the moving body (200a, 200b, 200c, 200d, 200e, 200f, 200g, 300) and the vehicle (100); and
notifying the action to be performed to the moving body based on the determined action when determining that the state of the passenger is in the predetermined state and that there is the risk of collision between the moving body (200a, 200b, 200c, 200d, 200e, 200f, 200g, 300) and the vehicle (100).

12. A non-transitory recording medium storing thereon a computer program, which when executed by a processor, causes the processor to perform operations including:
acquiring a result of detection of a moving body (200a) around a vehicle (100);
acquiring passenger state information indicating a state of a passenger carried on the vehicle (100);
determining, on the basis of the result of detection, whether there is a risk of collision between the moving body and the vehicle (100);
determining whether the state of the passenger as indicated by the passenger state information is a predetermined state where the passenger is estimated to be endangered or discomforted by an action that the vehicle (100) would take to avoid the risk of collision between the moving body (200a, 200b, 200c, 200d, 200e, 200f, 200g, 300) and the vehicle (100);
determining, in response to determining that the state of the passenger is in the predetermined state, an action to be performed by the moving body (200a, 200b, 200c, 200d, 200e, 200f, 200g, 300) for reducing the risk of collision between the moving body (200a, 200b, 200c, 200d, 200e, 200f, 200g, 300) and the vehicle (100); and
notifying the action to be performed to the moving body based on the determined action when determined that the state of the passenger is in the predetermined state and that there is the risk of collision between the moving body (200a, 200b, 200c, 200d, 200e, 200f, 200g, 300) and the vehicle (100).

## Patentansprüche

1. Informationsverarbeitungsvorrichtung (10) umfassend:
einen Prozessor; und
ein nichtflüchtiges Aufzeichnungsmedium, auf dem ein Computerprogramm gespeichert ist, das, wenn es von dem Prozessor ausgeführt wird, den Prozessor veranlasst, Operationen durchzuführen, einschließlich:
Erfassen eines Ergebnisses der Erfassung eines sich bewegenden Körpers (200a, 200b, 200c, 200d, 200e, 200f, 200g, 300) um ein Fahrzeug (100);
Erfassen von Fahrgastzustandsinformationen, die einen Zustand eines in dem Fahrzeug (100) beförderten Fahrgastes angeben;
Bestimmen, auf der Grundlage des Ergebnisses der Erfassung, ob ein Risiko einer Kollision zwischen dem sich bewegenden Körper (200a, 200b, 200c, 200d, 200e, 200f, 200g, 300) und dem Fahrzeug (100) besteht;
Bestimmen, ob der Zustand des Fahrgastes, wie er durch die Fahrgastzustandsinformation angezeigt wird, ein vorbestimmter Zustand ist, in dem der Fahrgast durch eine Aktion, die das Fahrzeug (100) ergreifen würde, um das Risiko einer Kollision zwischen dem sich bewegenden Körper (200a, 200b, 200c, 200d, 200e, 200f, 200g, 300) und dem Fahrzeug (100) zu vermeiden, schätzungsweise gefährdet oder gestört wird;
Bestimmen einer von dem sich bewegenden Körper (200a, 200b, 200c, 200d, 200e, 200f, 200g, 300) durchzuführenden Aktion zum Verringern des Risikos einer Kollision zwischen dem sich bewegenden Körper (200a, 200b, 200c, 200d, 200e, 200f, 200g, 300) und dem Fahrzeug (100) als Reaktion auf das Bestimmen, dass der Zustand des Fahrgastes in dem vorbestimmten Zustand ist; und
Mitteilen der auszuführenden Aktion an den sich bewegenden Körper (200a, 200b, 200c, 200d, 200e, 200f, 200g, 300) auf der Grundlage der bestimmten Aktion, wenn bestimmt wird, dass der Zustand des Fahrgastes in dem vorbestimmten Zustand ist und das Risiko einer Kollision zwischen dem sich bewegenden Körper (200a, 200b, 200c, 200d, 200e, 200f, 200g, 300) und dem Fahrzeug (100) besteht.

2. Informationsverarbeitungsvorrichtung (10) nach Anspruch 1, wobei die Aktion bewirkt, dass eine Beschleunigung oder eine Winkelgeschwindigkeit des Fahrzeugs (100) höher als ein vorbestimmter Schwellenwert ist.

3. Informationsverarbeitungsvorrichtung (10) nach Anspruch 1, wobei das Risiko der Kollision, das das Fahrzeug (100) auf den sich bewegenden Körper ausübt, den sich bewegenden Körper (200a, 200b, 200c, 200d, 200e, 200f, 200g, 300) veranlasst, eine Aktion, die der sich bewegende Körper (200a, 200b, 200c, 200d, 200e, 200f, 200g, 300) zu einem zukünftigen Zeitpunkt durchzuführen plant, abzubrechen oder zu verschieben.

4. Informationsverarbeitungsvorrichtung (10) nach Anspruch 1, wobei der vorbestimmte Zustand ein Zustand ist, in dem der Fahrgast steht, ein Zustand, in dem der Fahrgast sich nicht an einer in dem Fahrzeug (100) fixierten Vorrichtung festhält, ein Zustand, in dem der Fahrgast den Sicherheitsgurt nicht ordnungsgemäß anlegt, oder ein Zustand, in dem der Fahrgast ein Kind hält.

5. Informationsverarbeitungsvorrichtung (10) nach Anspruch 1, wobei das Bestimmen der Aktion das Bestimmen der Aktion in Abhängigkeit von einer Anzahl von Fahrgästen, die sich in dem vorbestimmten Zustand befinden, umfasst.

6. Informationsverarbeitungsvorrichtung (10) nach Anspruch 1, wobei die Vorgänge ferner umfassen:
Empfangen einer Antwort auf die Mitteilung; und
Steuern des Fahrzeugs (100) entsprechend der Antwort.

7. Informationsverarbeitungsvorrichtung (10) nach Anspruch 1, wobei der sich bewegende Körper (200a, 200b, 200c, 200d, 200e, 200f, 200g, 300) ein anderes Fahrzeug (100) ist, und
die bestimmte Aktion die Bewegungssteuerung dieses anderen Fahrzeugs (100) ist.

8. Informationsverarbeitungsvorrichtung (10) nach Anspruch 1, wobei der sich bewegende Körper (200a, 200b, 200c, 200d, 200e, 200f, 200g, 300) eine Person ist, und
die bestimmte Aktion eine Bewegung oder ein Anhalten der Person ist.

9. Informationsverarbeitungsvorrichtung (10) nach Anspruch 1, wobei die Mitteilung die Mitteilung von Steuerinformationen zum Erreichen der bestimmten Aktion umfasst.

10. Informationsverarbeitungsvorrichtung (10) nach Anspruch 1, wobei die Mitteilung die Mitteilung der Präsentation eines Bildes, eines Tons oder einer Vibration umfasst, die die bestimmte Aktion anzeigen.

11. Informationsverarbeitungsverfahren, umfassend:
Erfassen eines Ergebnisses der Erfassung eines sich bewegenden Körpers (200a, 200b, 200c, 200d, 200e, 200f, 200g, 300) um ein Fahrzeug (100);
Erfassen von Fahrgastzustandsinformationen, die einen Zustand eines in dem Fahrzeug (100) beförderten Fahrgastes angeben;
Bestimmen, auf der Grundlage des Ergebnisses der Erfassung, ob ein Risiko einer Kollision zwischen dem sich bewegenden Körper (200a, 200b, 200c, 200d, 200e, 200f, 200g, 300) und dem Fahrzeug (100) besteht;
Bestimmen, ob der Zustand des Fahrgastes, wie er durch die Fahrgastzustandsinformation angezeigt wird, ein vorbestimmter Zustand ist, in dem der Fahrgast durch eine Aktion, die das Fahrzeug (100) ergreifen würde, um das Risiko einer Kollision zwischen dem sich bewegenden Körper (200a, 200b, 200c, 200d, 200e, 200f, 200g, 300) und dem Fahrzeug (100) zu vermeiden, schätzungsweise gefährdet oder gestört wird;
Bestimmen einer von dem sich bewegenden Körper (200a, 200b, 200c, 200d, 200e, 200f, 200g, 300) auszuführenden Aktion zum Verringern des Risikos einer Kollision zwischen dem sich bewegenden Körper (200a, 200b, 200c, 200d, 200e, 200f, 200g, 300) und dem Fahrzeug (100) als Reaktion auf das Bestimmen, dass der Zustand des Fahrgastes in dem vorbestimmten Zustand ist; und
Mitteilen der auszuführenden Aktion an den sich bewegenden Körper auf der Grundlage der bestimmten Aktion, wenn bestimmt wird, dass der Zustand des Fahrgastes in dem vorbestimmten Zustand ist und das Risiko einer Kollision zwischen dem sich bewegenden Körper (200a, 200b, 200c, 200d, 200e, 200f, 200g, 300) und dem Fahrzeug (100) besteht.

12. Nichtflüchtiges Aufzeichnungsmedium, auf dem ein Computerprogramm gespeichert ist, das, wenn es von einem Prozessor ausgeführt wird, den Prozessor veranlasst, Operationen auszuführen, einschließlich:
Erfassen eines Ergebnisses der Erfassung eines sich bewegenden Körpers (200a) um ein Fahrzeug (100);
Erfassen von Fahrgastzustandsinformationen, die einen Zustand eines in dem Fahrzeug (100) beförderten Fahrgastes anzeigen;
Bestimmen, auf der Grundlage des Erfassungsergebnisses, ob ein Risiko einer Kollision zwischen dem sich bewegenden Körper und dem Fahrzeug (100) besteht;
Bestimmen, ob der Zustand des Fahrgastes, wie er durch die Fahrgastzustandsinformation angezeigt wird, ein vorbestimmter Zustand ist, in dem der Fahrgast durch eine Aktion, die das Fahrzeug (100) ergreifen würde, um das Risiko einer Kollision zwischen dem sich bewegenden Körper (200a, 200b, 200c, 200d, 200e, 200f, 200g, 300) und dem Fahrzeug (100) zu vermeiden, schätzungsweise gefährdet oder gestört wird;
Bestimmen einer von dem sich bewegenden Körper (200a, 200b, 200c, 200d, 200e, 200f, 200g, 300) auszuführenden Aktion zum Verringern des Risikos einer Kollision zwischen dem sich bewegenden Körper (200a, 200b, 200c, 200d, 200e, 200f, 200g, 300) und dem Fahrzeug (100) als Reaktion auf das Bestimmen, dass der Zustand des Fahrgastes in dem vorbestimmten Zustand ist; und
Mitteilen der auszuführenden Aktion an den sich bewegenden Körper auf der Grundlage der bestimmten Aktion, wenn bestimmt wird, dass der Zustand des Fahrgastes in dem vorbestimmten Zustand ist und das Risiko einer Kollision zwischen dem sich bewegenden Körper (200a, 200b, 200c, 200d, 200e, 200f, 200g, 300) und dem Fahrzeug (100) besteht.

## Revendications

1. Appareil de traitement d'informations (10) comprenant :
un processeur ; et
un support d'enregistrement non transitoire sur lequel est stocké un programme informatique qui, lorsqu'il est exécuté par le processeur, amène le processeur à effectuer des opérations telles que :
acquérir un résultat de détection d'un corps mobile (200a, 200b, 200c, 200d, 200e, 200f, 200g, 300) autour d'un véhicule (100) ;
acquérir des informations d'état de passager indiquant un état d'un passager transporté sur le véhicule (100) ;
déterminer, sur la base du résultat de la détection, s'il existe un risque de collision entre le corps mobile (200a, 200b, 200c, 200d, 200e, 200f, 200g, 300) et le véhicule (100) ;
déterminer si l'état du passager tel qu'indiqué par les informations d'état de passager est un état prédéterminé dans lequel il est estimé que le passager est mis en danger ou subit un inconfort par une action que le véhicule (100) prendrait pour éviter le risque de collision entre le corps mobile (200a, 200b, 200c, 200d, 200e, 200f, 200g, 300) et le véhicule (100) ;
déterminer, en réponse à la détermination du fait que l'état du passager est dans l'état prédéterminé, une action à effectuer par le corps mobile (200a, 200b, 200c, 200d, 200e, 200f, 200g, 300) pour réduire le risque de collision entre le corps mobile (200a, 200b, 200c, 200d, 200e, 200f, 200g, 300) et le véhicule (100) ; et
notifier l'action à effectuer au corps mobile (200a, 200b, 200c, 200d, 200e, 200f, 200g, 300) sur la base de l'action déterminée lorsqu'il est déterminé que l'état du passager est dans l'état prédéterminé et que le risque de collision entre le corps mobile (200a, 200b, 200c, 200d, 200e, 200f, 200g, 300) et le véhicule (100) existe.

2. Appareil de traitement d'informations (10) selon la revendication 1, l'action amenant une accélération ou une vitesse angulaire du véhicule (100) à devenir supérieure à un seuil prédéterminé.

3. Appareil de traitement d'informations (10) selon la revendication 1, le risque de collision que le véhicule (100) exerce sur le corps mobile amenant le corps mobile (200a, 200b, 200c, 200d, 200e, 200f, 200g, 300) à annuler ou à reporter une action que le corps mobile (200a, 200b, 200c, 200d, 200e, 200f, 200g, 300) planifie d'effectuer à un instant futur.

4. Appareil de traitement d'informations (10) selon la revendication 1, l'état prédéterminé étant un état dans lequel le passager est debout, un état dans lequel le passager ne tient pas sur un accessoire fixé en position dans le véhicule (100), un état dans lequel le passager ne porte pas une ceinture de sécurité d'une manière ordonnée ou un état dans lequel le passager tient un enfant.

5. Appareil de traitement d'informations (10) selon la revendication 1, la détermination de l'action comprenant la détermination de l'action en fonction d'un nombre de passagers qui sont dans l'état prédéterminé.

6. Appareil de traitement d'informations (10) selon la revendication 1, les opérations comprenant en outre :
la réception d'une réponse à la notification ; et
la commande du véhicule (100) en fonction de la réponse.

7. Appareil de traitement d'informations (10) selon la revendication 1, le corps mobile (200a, 200b, 200c, 200d, 200e, 200f, 200g, 300) étant un autre véhicule (100) et
l'action déterminée étant une commande de mouvement de cet autre véhicule (100).

8. Appareil de traitement d'informations (10) selon la revendication 1, le corps mobile (200a, 200b, 200c, 200d, 200e, 200f, 200g, 300) étant une personne et
l'action déterminée étant un mouvement ou un arrêt de la personne.

9. Appareil de traitement d'informations (10) selon la revendication 1, la notification comprenant la notification d'informations de commande pour obtenir l'action déterminée.

10. Appareil de traitement d'informations (10) selon la revendication 1, la notification comprenant la notification de la présentation d'une image, d'un son ou d'une vibration indiquant l'action déterminée.

11. Procédé de traitement d'informations comprenant :
acquérir un résultat de détection d'un corps mobile (200a, 200b, 200c, 200d, 200e, 200f, 200g, 300) autour d'un véhicule (100) ;
acquérir des informations d'état de passager indiquant un état d'un passager transporté sur le véhicule (100) ;
déterminer, sur la base du résultat de la détection, s'il existe un risque de collision entre le corps mobile (200a, 200b, 200c, 200d, 200e, 200f, 200g, 300) et le véhicule (100) ;
déterminer si l'état du passager tel qu'indiqué par les informations d'état de passager est un état prédéterminé dans lequel il est estimé que le passager est mis en danger ou subit un inconfort par une action que le véhicule (100) prendrait pour éviter le risque de collision entre le corps mobile (200a, 200b, 200c, 200d, 200e, 200f, 200g, 300) et le véhicule (100) ;
déterminer, en réponse à la détermination du fait que l'état du passager est dans l'état prédéterminé, une action à effectuer par le corps mobile (200a, 200b, 200c, 200d, 200e, 200f, 200g, 300) pour réduire le risque de collision entre le corps mobile (200a, 200b, 200c, 200d, 200e, 200f, 200g, 300) et le véhicule (100) ; et
notifier l'action à effectuer au corps mobile sur la base de l'action déterminée lorsqu'il est déterminé que l'état du passager est dans l'état prédéterminé et que le risque de collision entre le corps mobile (200a, 200b, 200c, 200d, 200e, 200f, 200g, 300) et le véhicule (100) existe.

12. Support d'enregistrement non transitoire sur lequel est stocké un programme informatique qui, lorsqu'il est exécuté par un processeur, amène le processeur à effectuer des opérations telles que :
acquérir un résultat de détection d'un corps mobile (200a) autour d'un véhicule (100) ;
acquérir des informations d'état de passager indiquant un état d'un passager transporté sur le véhicule (100) ;
déterminer, sur la base du résultat de la détection, s'il existe un risque de collision entre le corps mobile et le véhicule (100) ;
déterminer si l'état du passager tel qu'indiqué par les informations d'état de passager est un état prédéterminé dans lequel il est estimé que le passager est mis en danger ou subit un inconfort par une action que le véhicule (100) prendrait pour éviter le risque de collision entre le corps mobile (200a, 200b, 200c, 200d, 200e, 200f, 200g, 300) et le véhicule (100) ;
déterminer, en réponse à la détermination du fait que l'état du passager est dans l'état prédéterminé, une action à effectuer par le corps mobile (200a, 200b, 200c, 200d, 200e, 200f, 200g, 300) pour réduire le risque de collision entre le corps mobile (200a, 200b, 200c, 200d, 200e, 200f, 200g, 300) et le véhicule (100) ; et
notifier l'action à effectuer au corps mobile sur la base de l'action déterminée lorsqu'il est déterminé que l'état du passager est dans l'état prédéterminé et que le risque de collision entre le corps mobile (200a, 200b, 200c, 200d, 200e, 200f, 200g, 300) et le véhicule (100) existe.
